(19)

Europäisches
Patentamt
European
Patent Office
Office européen
des brevets

(11) **EP 4 094 585 A1**

(12) **EUROPEAN PATENT APPLICATION**
published in accordance with Art. 153(4) EPC

(43) Date of publication:
**30.11.2022 Bulletin 2022/48**

(21) Application number: **21756201.6**

(22) Date of filing: **08.02.2021**

(51) International Patent Classification (IPC):
**A23L 5/00** (2016.01)    **A23L 7/109** (2016.01)
**A23D 7/005** (2006.01)    **A23D 9/007** (2006.01)

(52) Cooperative Patent Classification (CPC):
**A23D 7/005; A23D 9/007; A23L 5/00; A23L 7/109**

(86) International application number:
**PCT/JP2021/004661**

(87) International publication number:
**WO 2021/166723 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.02.2020  JP 2020027510
01.09.2020  PCT/JP2020/033144**

(71) Applicant: **Mizkan Holdings Co., Ltd.
Handa-shi, Aichi 475-8585 (JP)**

(72) Inventors:
• **IHARA, Junichiro
  Handa-shi, Aichi 475-8585 (JP)**
• **KONISHI, Manabu
  Handa-shi, Aichi 475-8585 (JP)**

(74) Representative: **Hasegawa, Kan
Patentanwaltskanzlei Hasegawa
Alois-Steinecker-Straße 19
85354 Freising (DE)**

(54) **OIL-AND-FAT-CONTAINING COMPOSITION AND PRODUCTION METHOD THEREFOR**

(57)    Provided is an oil-and-fat-containing composition which is for food and in which oxidized odor of oil and fat caused by 1-hexanol or 1-pentanol is suppressed. This composition is an edible oil-and-fat-containing composition containing 1-hexanol and/or 1-pentanol, further contains hexanal, and satisfies the following (A) and (B).
(A) The content of the hexanol is 10 ppb by mass to 100 ppm by mass.
(B) $\alpha/\beta$ is 1-10,000 and/or $\alpha/\gamma$ is 1-10,000 (where, regarding peak areas measured through SPME-GC/MS at a sample temperature of 80°C, the peak area (m/z=82) of the hexanal is defined as $\alpha$, the peak area (m/z=84) of the 1-hexanol is defined as $\beta$, and the peak area (m/z=70) of the 1-pentanol is defined as $\gamma$).

**Description**

**TECHNICAL FIELD**

The present invention relates to an oil-and-fat-containing composition for use in foods and a method of producing the composition.

**BACKGROUND ART**

Foods containing oil and fat may be accompanied by unpleasant oxidized odor of oil and fat. Examples of ingredients known to involve such oxidized odor include 1-hexanol and 1-pentanol. A method known to the art to suppress such the oxidized odor of oil and fat and while enhancing and sustaining the original flavor and taste of the oil and fat as raw materials includes adding yeast digest and heating (Patent Document 1).

**LIST OF CITATIONS**

Patent Literature

[Patent Literature 1] WO2018/147326 A

**SUMMARY OF INVENTION**

**PROBLEM TO BE SOLVED BY THE INVENTION**

However, the method described in Patent Literature 1 is difficult to use, since the taste of yeast digest is easily imparted to oil and fat. The present invention has been made in view of the above-mentioned problem, and aims to provide an edible oil-and-fat-containing composition in which the oxidized odor of oil and fat caused by 1-hexanol and 1-pentanol is suppressed.

**MEANS TO SOLVE THE PROBLEM**

Through intensive efforts in view of these circumstances, the present inventors have found that the oxidized odor of oil and fat can be significantly suppressed by adding a specific amount of hexanal to the composition and adjusting the ratio of the hexanal content to the 1-hexanol and/or 1-pentanol content(s) to within a predetermined range, thereby completing the present invention.
Specifically, aspects of the present invention include Aspects [1] to [39] below.

[Aspect 1]

An oil-and-fat-containing composition comprising 1-hexanol and/or 1-pentanol for food, the composition further comprising hexanal and having:

(A) a hexanal content of 10 mass ppb or more to 100 mass ppm or less; and
(B) an $\alpha/\beta$ ratio of 1 or more to 10000 or less and/or an $\alpha/\gamma$ ratio of 1 or more to 10000

or less, where $\alpha$ refers to a peak area of hexanal (m/z=82), $\beta$ refers to a peak area of 1-hexanol (m/z=84), and $\gamma$ refers to a peak area of 1-pentanol (m/z=70) obtained by measuring the composition at a sample temperature of 80°C using solid-phase micro-extraction gas chromatography/mass spectrometry.

[Aspect 2]

The oil-and-fat-containing composition according to Aspect 1, further having:
(C) an $\alpha/(\beta+\gamma)$ ratio of 0.5 or more to 5000 or less.

[Aspect 3]

The oil-and-fat-containing composition according to Aspect 1 or 2, further having:
(D) a $\beta/\gamma$ ratio of 0.2 or more.

[Aspect 4]

The oil-and-fat-containing composition according to any one of Aspects 1 to 3, further having:
(E) an insoluble dietary fiber content of 1 mass % or more in terms of dry mass basis.

[Aspect 5]

The oil-and-fat-containing composition according to any one of Aspects 1 to 4, further having:
(F) a starch content of 10 mass % or more in terms of dry mass basis.

[Aspect 6]

The oil-and-fat-containing composition according to any one of Aspects 1 to 5, further having:
(G) a protein content of 5.5 mass % or more in terms of dry mass basis.

[Aspect 7]

The oil-and-fat-containing composition according to any one of Aspects 1 to 6, further having:
(H) a total oil-and-fat content of 0.01 mass % or more in terms of dry mass basis.

[Aspect 8]

The oil-and-fat-containing composition according to any one of Aspects 1 to 7, further having:
(I) a dry basis water content of 60 mass % or less.

[Aspect 9]

The oil-and-fat-containing composition according to any one of Aspects 1 to 8, further having:
(J) a resistant starch value of 1.5% or more.

[Aspect 10]

The oil-and-fat-containing composition according to any one of Aspects 1 to 9, further having a protein dispersibility index (PDI) of less than 55 mass %.

[Aspect 11]

The oil-and-fat-containing composition according to any one of Aspects 1 to 10, wherein when a 6% suspension of a crushed product of the composition is observed, the number of starch grain structures observed is 300 /mm$^2$ or less.

[Aspect 12]

The oil-and-fat-containing composition according to any one of Aspects 1 to 11, comprising a pulse.

[Aspect 13]

The oil-and-fat-containing composition according to Aspect 12, wherein the pulse is a pulverized pulse.

[Aspect 14]

The oil-and-fat-containing composition according to Aspect 12 or 13, wherein the pulse is one or more species of pulse selected from Pisum, Phaseolus, Cajanus, Vigna, Vicia, Cicer, Glycine and Lens species.

[Aspect 15]

The oil-and-fat-containing composition according to any one of Aspects 1 to 14, having a degree of gelatinization of 30% or more.

[Aspect 16]

The oil-and-fat-containing composition according to Aspect 15, wherein the degree of gelatinization has increased by 5% or more through a gelatinization treatment.

[Aspect 17]

The oil-and-fat-containing composition according to Aspect 15 or 16, wherein starch at least on the solid surface has been aged.

[Aspect 18]

The oil-and-fat-containing composition according to Aspect 17, wherein the resistant starch value has increased by more than 0% through an aging treatment.

[Aspect 19]

The oil-and-fat-containing composition according to any one of Aspects 1 to 18, which is in a solid state.

[Aspect 20]

A crushed oil-and-fat-containing composition produced by crushing the solid oil-and-fat-containing composition according to Aspect 19.

[Aspect 21]

A crushed oil-and-fat-containing composition agglomerate produced by agglomerating the crushed oil-and-fat-containing composition according to Aspect 20.

[Aspect 22]

A food product comprising the oil-and-fat-containing composition according to any one of Aspects 1 to 19 and/or the crushed oil-and-fat-containing composition according to Aspect 20 and/or the crushed oil-and-fat-containing composition agglom erate according to Aspect 21.

[Aspect 23]

A method for producing an oil-and-fat-containing composition according to any one of Aspects 1 to 19, comprising: mixing an oil-and-fat-containing food ingredient optionally with one or more other ingredients; and adjusting the hexanal, 1-hexanol, and 1-pentanol contents so as to satisfy the requirements recited in (A) and (B).

[Aspect 24]

The method according to Aspect 23, wherein the adjusting of the hexanal, 1-hexanol, and 1-pentanol contents is carried out by subjecting an oil-and-fat-containing food ingredient having a total content of 1-hexanol and 1-pentanol of 1 mass ppb or more to a gelatinization treatment.

[Aspect 25]

A method for producing the oil-and-fat-containing composition according to Aspect 17 or 18, comprising: subjecting an oil-and-fat-containing composition produced via the method according to Aspect 23 or 24 to an aging treatment of starch.

[Aspect 26]

A method for producing the crushed oil-and-fat-containing composition according to Aspect 20, comprising: crushing an oil-and-fat-containing composition produced via the method according to any one of Aspects 23 to 25.

[Aspect 27]

A method for producing the crushed oil-and-fat-containing composition agglomerate according to Aspect 21, comprising: agglomerating a crushed oil-and-fat-containing composition produced via the method according to Aspect 26.

**EFFECT OF THE INVENTION**

The present invention provides an edible oil-and-fat-containing composition in which the oxidized odor of oil and fat is suppressed.

**DESCRIPTION OF EMBODIMENTS**

The present invention will now be described based on specific embodiments. However, the invention is in no way bound by the following embodiments, but can be implemented in any form to the extent that it does not depart from the intent of the present invention.

The term "dry mass basis" refers to the mass equivalent value at a water content of 0% by mass. The water content in a sample can be measured by a method similar to the method for measurering the "dry basis water content" described below.

[Edible Oil-and-Fat-Containing Composition]

An aspect of the present invention relates to an oil-and-fat-containing composition containing 1-hexanol and/or 1-pentanol for food as well as hexanal, wherein the contents of these ingredients satisfy the Requirements (A) and (B) mentioned below (hereinafter also referred to as "the composition of the present invention").

*Oil and fat:

The composition of the present invention contains oil and fat. The oils and fats that can be used for the composition of the present invention are not limited. They may be oils and fats contained in edible plants or any other food ingredients used as raw materials for the composition of the present invention, or they may be oils and fats added separately from such food ingredients. Examples of edible plants and other food ingredients that can be used as raw materials for the composition of the present invention will be explained later. Examples of oils and fats that can be added separately from such food ingredients are one or more selected from sesame oil, rapeseed oil, high oleic rapeseed oil, soybean oil, palm oil, palm stearin, palm olein, palm kernel oil, palm fractionated oil (PMF), cottonseed oil, corn oil, sunflower oil, high oleic sunflower oil, safflower oil, olive oil, flaxseed oil, rice oil, camellia oil, egoma oil, aromatic oil, coconut oil, grapeseed oil, peanut oil, almond oil, avocado oil, salad oil, canola oil, fish oil, beef fat, pork fat, chicken fat, or MCT (medium chain triglycerides), diglycerides, hardened oil, esterified oil, milk fat, ghee, cocoa butter, etc. Among these, oils and fats derived from plants are preferred, and those derived from cereals and/or pulse are even more preferred, those derived from pulse are even more preferred, especially those derived from peas, and those derived from yellow peas are even more preferred. The oil and fat in the composition of the present invention may be derived from one material or from two or more materials. The oil and fat in the composition of the present invention may preferably be those in the form of liquid at room temperature.

The total oil-and-fat content in the composition of the present invention may preferably be within a predetermined range. Specifically, the total oil-and-fat content in the composition of the present invention in terms of dry mass basis may preferably be 0.01 mass % or more, particularly 0.1 mass % or more, particularly 0.2 mass % or more, especially 0.5 mass % or more. When the total oil-and-fat content is below the lower limit mentioned above, the oxidized odor may be so weak that the problem to be addressed by present invention may hardly be present. On the other hand, the upper limit for the total oil-and-fat content in the composition of the present invention may not particularly be limited, but the total oil-and-fat content in terms of dry mass basis may preferably be 17 mass % or less, particularly 15 mass % or less, more preferably 13 mass % or less, more preferably 10 mass % or less, more preferably 8.0 mass % or less, more preferably 7.0 mass % or less, more preferably 6.0 mass % or less, more preferably 5.0 mass % or less, more preferably 4.0 mass % or less, especially 3.0 mass % or less. When the total oil-and-fat content exceeds the upper limit, the oxidized odor may be too strong.

In the present invention, the total oil and fat content in the composition is measured by Soxhlet extraction with diethyl ether using the entire composition as a sample, according to the Japan Standard Tables for Food Composition 2015 (7th revised edition).

*Hexanal:

A characteristic of the composition of the present invention is that the content of hexanal (CAS Registry No.:66-25-1) is within a predetermined range (hereinafter also referred to as "Requirement (A)"). The hexanal in the composition of the present invention may be derived from edible plants or any other food ingredients used as raw materials for the composition of the present invention, or it may be added separately from such food ingredients, or it may be generated during the production of the composition of the present invention.

Specifically, the lower limit of the hexanal content in the composition of the present invention is 10 mass ppb or more. It may preferably be 20 mass ppb or more, more preferably 30 mass ppb or more, even more preferably 50 mass ppb or more, still more preferably 80 mass ppb or more, especially 100 mass ppb or more. When the hexanal content is below the lower limit mentioned above, the oxidized odor of oil and fat may not be sufficiently suppressed. On the other hand, the upper limit of the hexanal content in the composition of the present invention is 100 mass ppm or less. It may preferably be 50 mass ppm or less, more preferably 30 mass ppm or less, even more preferably 20 mass ppm or less, more preferably 10 mass ppm or less, more preferably 5 mass ppm or less, more preferably 3 mass ppm or less, more preferably 2 mass ppm or less, especially 1 mass ppm or less. When the hexanal content exceeds the upper limit mentioned above, off-flavors may occur.

In the present invention, the content of hexanal in the composition is measured by solid phase micro-extraction gas chromatography mass spectrometry (SPME-GC/MS), specifically by the procedure described in the Examples below.

*SPME-GC/MS peaks of aroma components:

Another characteristic of the composition of the present invention is that when the composition is measured by solid phase micro-extraction gas chromatography mass spectrometry (SPME-GC/MS) at a temperature of 80°C and the peak area of hexanal (m/z=82) is determined to be $\alpha$, the peak area of 1-hexanol (CAS Registry No.: 111-27-3) の peak area (m/z=84) is determined to be $\beta$, and the peak area of 1-pentanol (CAS Registry No.:71-41-0) (m/z=70) is determined to be $\gamma$, then either or both of the $\alpha/\beta$ ratio and/or the $\alpha/\gamma$ ratio are each within a predetermined range (hereinafter also referred to as "Requirement (B)").

Specifically, the ratio between the peak area of hexanal ($\alpha$) to the peak area of 1-hexanol ($\beta$), i.e., $\alpha/\beta$, may typically be 1 or more, but from the viewpoint of sufficiently suppressing the oxidized odor of oil and fat, it may preferably be 2 or more, more preferably 4 or more, even more preferably 6 or more, or 8 or more, still more preferably 10 or more, especially 20 or more. On the other hand, the upper limit of the $\alpha/\beta$ ratio may typically be 10000 or less, but from the viewpoint of sufficiently suppressing off-flavors, it may preferably be 5000 or less, more preferably 3000 or less, even more preferably 2000 or less, or 1000 or less, or 800 or less, still more preferably 400 or less, especially 100 or less.

Likewise, the ratio between the peak area of hexanal ($\alpha$) to the peak area of 1-pentanol ($\gamma$), i.e., $\alpha/\gamma$, may typically be 1 or more, but from the viewpoint of sufficiently suppressing the oxidized odor of oil and fat, it may preferably be 2 or more preferably, particularly 3 or more, more preferably 4 or more, or 5 or more, particularly 10 or more, especially 20 or more. On the other hand, the upper limit of the $\alpha/\gamma$ ratio may typically be 10000 or less, but from the viewpoint of sufficiently suppressing off-flavors, it may preferably be 5000 or less, particularly 3000 or less, more preferably 2000 or less, or 1000 or less, particularly 800 or less, especially 600 or less.

Although at least either of the $\alpha/\beta$ area ratio and the $\alpha/\gamma$ area ratio has only to satisfy the above requirements, both of these ratios may preferably satisfy these requirements.

In addition, the ratio of the peak area of hexanal ($\alpha$) to the sum of the peak area of 1-hexanol ($\beta$) and the peak area of 1-pentanol ($\gamma$) in the composition of the present invention, i.e., $\alpha/(\beta+\gamma)$, may preferably be within a predetermined range. Specifically, from the viewpoint of sufficiently suppressing the oxidized odor of oil and fat, the lower limit of the $\alpha/(\beta+\gamma)$ area ratio may preferably be 0.5 or more, particularly 0.7 or more, more preferably 1.0 or more, or 1.5 or more, or 2 or more, or 3 or more, or 5 or more, particularly 7 or more, especially 10 or more. On the other hand, from the viewpoint of sufficiently suppressing off-flavors, the upper limit of the $\alpha/(\beta+\gamma)$ area ratio may preferably be 5000 or less, particularly 2500 or less, more preferably 1000 or less, or 500 or less, or 300 or less, particularly 200 or less, especially 100 or less.

Likewise, from the viewpoint of sufficiently suppressing raw odor, the ratio of the peak area of 1-hexanol ($\beta$) to the peak area of 1-pentanol ($\gamma$) in the composition of the present invention, i.e., $\beta/\gamma$, may preferably be within a predetermined range. Specifically, the lower limit of the $\beta/\gamma$ area ratio may preferably be 0.2 or more preferably, particularly 0.5 or more, more preferably 0.7 or more, or 1 or more, particularly 5 or more, especially 10 or more. On the other hand, from the viewpoint of sufficiently suppressing off-flavors, the upper limit of the $\beta/\gamma$ area ratio may preferably be 5000 or less, particularly 1000 or less, more preferably 500 or less, or 300 or less, particularly 200 or less, especially 100 or less.

The methods for separating and concentrating the aroma components, measuring the aroma components by solid-phase microextraction gas chromatography mass spectrometry (SPME-GC/MS), and determining the peak areas of the aroma components shall be performed according to the procedures specifically described in the Examples below.

*Insoluble dietary fiber:

The composition of the present invention may preferably contain insoluble dietary fiber since this may enhance the effects of the present invention. The types of insoluble dietary fibers are not limited, examples thereof including one or more selected from those derived from cereals, pulse, potatoes, and vegetables. From the viewpoint of the texture of the composition, those derived from cereals and/or pulse are more preferred, those derived from pulse are even more preferred, especially those derived from peas, and those derived from yellow peas are even more preferred. The insoluble dietary fiber included in the composition of the present invention may be derived from food ingredients used as raw materials for the composition of the present invention, or may be added separately from such food ingredients. The insoluble dietary fiber in the composition of the present invention may be derived from a single raw material or from two or more raw materials.

The insoluble dietary fiber content in the composition of the present invention may preferably be within a predetermined range. Specifically, the insoluble dietary fiber content in terms of dry mass basis may preferably be 1.0 mass % or more, more preferably 2.0 mass % or more, or 3.0 mass % or more, or 4.0 mass % or more, or 5.0 mass % or more, or 6.0 mass % or more, or 7.0 mass % or more, or 8.0 mass % or more, or 9.0 mass % or more, or 10.0 mass % or more. When the insoluble dietary fiber content is below the lower limit mentioned above, the effects of the present invention may not be sufficiently exhibited. On the other hand, the upper limit of the insoluble dietary fiber content in the composition of the present invention is not particularly limited, but in terms of dry mass basis, it may preferably be 70 mass % or less, particularly 60 mass % or less, more preferably 50 mass % or less, particularly 40 mass % or less. When the insoluble dietary fiber content exceeds the upper limit mentioned above, the texture of the oil-and-fat-containing composition may become worse.

The insoluble dietary fiber contained in the composition of the present invention may be added to the composition as a pure product, but it may preferably be derived from edible plants and other food materials that are used as raw materials for the composition of the present invention. Specifically, the ratio of the content of the insoluble dietary fiber derived from edible plants (especially pulse) to the total insoluble dietary fiber content in the composition of the present invention may preferably be 50 mass % or more, more preferably 60 mass % or more, or 70 mass % or more, or 80 mass % or more, still more preferably 90 mass % or more, and it may especially preferably be substantially 100 mass %.

In addition, the insoluble dietary fiber in the composition of the present invention may preferably be present in the state of being contained in edible plant. Specifically, the ratio of the content of the insoluble dietary fiber present in the state of being contained in edible plant (especially pulse) to the total insoluble dietary fiber content in the composition may preferably be 50 mass % or more, particularly 60 mass % or more, more preferably 70 mass % or more, particularly 80 mass % or more, or 90 mass % or more, especially 100 mass %.

In the present invention, the insoluble dietary fiber content in a composition is measured by the Prosky variant method according to the Japan Standard Tables for Food Composition 2015 (7th revised edition).

*Starch:

The composition of the present invention may preferably contain starch, since this may serve to enhance flavor release. The types of starches that can be used are not limited, examples thereof including one or more selected from among those derived from cereals, seeds, pulse, potatoes, and vegetables. Preferred among them from the viewpoint of texture of the composition are those derived from cereals and/or pulse, and those derived from pulse are even more preferred, especially those derived from peas, and those derived from yellow peas are even more preferred. The starch contained in the composition of the present invention may be derived from food ingredients used as raw materials for the composition of the present invention, or may be added separately from such food ingredients. The starch contained in the composition of the present invention may be derived from a single material or from two or more materials.

The starch content in the composition of the present invention may preferably be within a predetermined range. Specifically, the starch content in terms of dry mass basis may preferably be 10 mass % or more, more preferably 15 mass % or more, 20 mass % or more, 25 mass % or more, 30 mass % or more, 35 mass % or more, 40 mass % or more, 45 mass % or more, or 50 mass % or more. When the starch content is below the lower limit mentioned above, the effect of improving flavor release may not be exhibited. On the other hand, the upper limit of the starch content in the composition of the present invention is not particularly limited, but in terms of dry mass basis, it may preferably be 90 mass % or less, particularly 85 mass % or less, more preferably 80 mass % or less, particularly 75 mass % or less. When the starch content exceeds the upper limit mentioned above, the flavor of the starch itself may become too strong.

The starch contained in the composition of the present invention may be added to the composition as a pure product, but it may preferably be derived from edible plants or other food materials used as raw materials for the composition of the present invention. Specifically, the ratio of the starch content derived from edible plants to the total starch content in the composition of the present invention may preferably be 50 mass % or more, more preferably 60 mass % or more, 70 mass % or more, 80 mass % or more, or 90 mass % or more, and especially it may preferably be substantially 100 mass %.

In addition, the starch in the composition of the present invention may preferably be present in the state of being contained in edible plant. Specifically, the ratio of the content of the starch present in the state of being contained in edible plant (especially pulse) to the total starch content in the composition may preferably be 50 mass % or more, particularly 60 mass % or more, more preferably 70 mass % or more, particularly 80 mass % or more, or 90 mass % or more, especially 100 mass %.

In the present invention, the starch content in a composition is determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

*Gelatinization of starch:

According to one embodiment of the present invention, it is preferable that at least a portion of the starch contained in the composition is gelatinized. Specifically, from the viewpoint of suppressing the oxidized odor of oil and fat and solidifying the composition to make it easier to eat, handle, and method, the degree of gelatinization of the starch in the composition may preferably be 30% or more, particularly 40% or more, more preferably 50% or more, particularly 60% or more, especially 70% or more. On the other hand, the upper limit of the degree of gelatinization of the starch in the composition is not particularly limited, but when this value is too high, then starch may break down and the composition may become sticky and of undesirable quality. Therefore, the upper limit of the degree of gelatinization of the starch in the composition may preferably be 99% or less, particularly 95% or less, more preferably 90% or less. In the present invention, the degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://www.jfrl.or.jp/storage/file/221.pdf).

The composition of the present invention may also preferably be characterized in that the increase in the degree of gelatinization during the gelatinization method is within a predetermined range. This feature will be explained later.

*Aging of starch/resistant starch:

According to one embodiment of the present invention, the composition of the present invention may preferably be characterized in that starch at least at the solid surface of the composition is aged. Aging of starch will be explained later.

In this regard, the composition of the present invention may preferably be characterized in that the resistant starch is within a predetermined range. The term "resistant starch" herein refers to starch that is not hydrolyzed to D-glucose under specified conditions. Specifically, the resistant starch of a sample refers to the starch that is not hydrolyzed to D-glucose when the sample is mixed with pancreatic alpha-amylase/amyloglucosidase (PAA/AMG), adjusted to pH 6.0, allowed to react for 4 hours at 37°C, and then subjected to a rapid-type resistant starch assay (RAPRS). The resistant starch value in a sample is expressed as the mass ratio of the resistant starch content to the total starch content in the sample. For example, if the starch content in a composition is 50 mass % and the resistant starch content in the composition is 1 mass %, then the resistant starch value is determined to be 2%. The resistant starch value can be measured using the RESISTANT STARCH ASSAY PROCEDURE (Megazyme).

The resistant starch value of the composition of the present invention may preferably be 1.5% or more, more preferably 2.0% or more, or 2.5% or more, particularly 3.0% or more, especially 3.5% or more. When the resistant starch value of the composition is equal to or more than this lower limit, the aroma of the ingredients in the composition tends to be more easily perceived and the flavor release may be improved upon consumption. Although the principle behind this is not known, it is presumably because the presence of a certain amount of resistant starch may serve to prevent the ingredients from leaking out of the composition into water and make the aroma of the ingredients more easily perceived, and also may serve to improve the flavor release in combination with the aforementioned aroma ingredients' effects of suppressing the oxidized odor of oil and fat. On the other hand, the upper limit of the resistant starch value is not limited, but it may preferably be 30% or less, particularly 20% or less, more preferably 15% or less.

The composition of the present invention may also preferably be characterized in that the increase in the resistant starch value during the aging treatment is within a predetermined range. This feature will be explained later.

(Starch grain structures)

The composition of the present invention may preferably be characterized in that the number of starch grain structures observed under certain conditions is equal to or less than a predetermined value, since the composition satisfying this feature tends to have a smooth texture and be less powdery. Although the principle behind this is unknown, it is presumably because the composition processed under high temperature, high pressure, and strong kneading conditions until the starch grain structure is destroyed, whereby the starch is diffused and homogenized throughout the composition in a matrix-like state, resulting in a smooth texture with less powderiness of the composition (specifically, as described below, it is preferable to use starch prepared by subjecting a dough having a dry basis water content of no less than a predetermined value to kneading at a maximum attainable temperature of no less than a predetermined value with an SME value of no less than a predetermined value while applying a pressure of no less than a predetermined value in addition to atmospheric pressure.).

The starch grain structure herein refers to an iodine-stained structure that has a circular shape with a diameter of 1 to 50 $\mu$m on a flat image. The starch grain structure can be observed under a magnified field of view of, e.g., a 6% water suspension of a crushed product of the composition in water. Specifically, a 6% suspension of the composition powder is prepared by screening the pulverized product of the composition through a sieve with a mesh opening of 150 $\mu$m, and suspending 3 mg of the composition powder which has passed through the 150-$\mu$m sieve in 50 $\mu$L of water. A sample is prepared by placing this suspension on a slide, and observed either using a phase contrast microscope under polarized light or under an optical microscope with iodine-staining the sample. The magnification ratio is not limited, but may be, for example, 100x or 200x. If the starch grain structure is uniformly distributed in the prepared sample, the percentage of starch grain structure in the entire sample can be estimated by observing a representative field of view of the sample. On the other hand, if the distribution of the starch grain structure in the sample is uneven, a predetermined number of fields of view (e.g., two or more, e.g., five or ten) in the sample may be observed, and the results of the observations may be added together as the measurement for the entire sample.

Specifically, the number of starch grain structures observed for the composition of the present invention under the conditions mentioned above may preferably be 300/mm$^2$ or less, particularly 250/mm$^2$ or less, more preferably 200/mm$^2$ or less, particularly 150/mm$^2$ or less, or 100/mm$^2$ or less, or 50/mm$^2$ or less, or 30/mm$^2$ or less, or 10/mm$^2$ or less, especially 0/mm$^2$.

The iodine solution used for starch staining herein refers to a diluted iodine-potassium iodide solution of containing 0.05 mol/L of iodine (also referred to herein as "0.05mol/L iodine solution" or simply as "0.05 mol/L iodine"). Unless otherwise specified, the iodine solution used herein may be a "0.25 mM iodine solution," which is prepared by using a mixed iodine-potassium iodide solution containing 93.7 mass % of water, 0.24 mol/L (4.0 mass %) of potassium iodide, and 0.05 mol/L (1.3 mass%) of iodine ("0.05 mol/L iodine solution (product code 09 1-00475)" by FUJIFILM Wako Pure Chemicals Co.), and diluting it 200 times with water.

*Protein:

The composition of the present invention may preferably contain protein. The types of proteins that can be used are not limited, examples thereof including one or more selected from among those derived from cereals, seeds, pulse, potatoes, and vegetables. Preferred among them from the viewpoint of texture of the composition are those derived from cereals and/or pulse, and those derived from pulse are even more preferred, especially those derived from peas, and those derived from yellow peas are even more preferred. The protein contained in the composition of the present invention may be derived from food ingredients used as raw materials for the composition of the present invention, or may be added separately from such food ingredients. The protein contained in the composition of the present invention may be derived from a single material or from two or more materials.

The protein content in the composition of the present invention may preferably be within a predetermined range. Specifically, the protein content in terms of dry mass basis may preferably be 5.5 mass % or more, particularly 6 mass % or more, more preferably 7 mass % or more, particularly 8 mass % or more, or 9 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more, or 19 mass % or more, or 20 mass % or more, or 21 mass % or more, especially 22 mass % or more. When the protein content is below the lower limit mentioned above, the effects of the present invention may not be sufficiently exhibited. On the other hand, the upper limit of the protein content in the composition of the present invention is not particularly limited, but in terms of dry mass basis, it may preferably be 85 mass % or less, particularly 80 mass % or less, more preferably 75 mass % or less, particularly 70 mass % or less, or 65 mass % or less, especially 60 mass % or less. When the protein content exceeds the upper limit mentioned above, the texture of the oil-and-fat-containing composition may be worsened.

The protein contained in the composition of the present invention may be added to the composition as a pure product, but it may preferably be derived from edible plants or other food materials used as raw materials for the composition of the present invention. Specifically, the ratio of the protein content derived from edible plants to the total protein content in the composition of the present invention may preferably be 50 mass % or more, more preferably 60 mass % or more, 70 mass % or more, 80 mass % or more, or 90 mass % or more, and especially it may preferably be substantially 100 mass %.

In the present invention, the protein content in a composition is measured according to the Japan Standard Tables for Food Composition 2015 (7th revised edition) by multiplying the amount of nitrogen determined according to the modified Kjeldahl method by the "nitrogen -protein conversion factor" (e.g., in the case of pulse other than soybeans, a factor of 6.25, which corresponds to "Other foods").

(PDI of protein)

The protein contained in the composition of the present invention may preferably have been subjected to heating at a temperature of no less than 100°C, because the heating tends to reduce the solubility of the protein and improve the balance between the oxidized odor of oil and fat and the aroma of flavor release. Although the principle behind this is unknown, it is presumably because the insolubilized protein may create voids inside the starch, which facilitates volatilization of the material's aroma and improves flavor release, thereby improving the aroma balance. Specifically, the protein dispersibility index (PDI) of the composition of the present invention may preferably be less than 55 mass %, particularly less than 50 mass %, more preferably less than 45 mass %, particularly less than 40 mass %, or less than 35 mass %, or less than 30 mass %, or less than 25 mass %, or less than 20 mass %, or less than 15 mass %, especially less than 10 mass %. On the other hand, the lower limit of the PDI value is not particularly limited, but it may be 0 mass % or more, more preferably 2 mass % or more, particularly 4 mass % or more.

The protein dispersibility index (PDI) value herein refers to an index of protein solubility, and can be obtained as the percentage of the soluble nitrogen content to the total nitrogen content in the composition {(soluble nitrogen content in the composition)/(total nitrogen content in the composition) $\times$ 100 (%)} according to the standard method. Specifically, a sample to be measured is mixed with 20 times the volume of water and then crushed (using a Microtech Nithion NS-310E3 homogenizer at 8500 rpm for 10 minutes), and the total nitrogen content of the resulting crushed liquid is multiplied by 20 to determine the total nitrogen content of the entire composition. The crushing solution is then centrifuged (3000G for 10 minutes), and the total nitrogen content of the supernatant obtained is multiplied by 20 is then multiplied by 20 to determine the water soluble nitrogen content, whereby the PDI value in the composition can be determined. The total nitrogen content is measured using the combustion method (improved Dumas method) specified in the Food Labeling Law ("About Food Labeling Standards" (March 30, 2015, Shokuhin Table No. 139)).

*Edible plant/pulse:

The composition of the present invention may preferably contain an edible plant as a raw material. The types of edible plants that can be used are not limited, but include cereals, seeds, pulse, potatoes, and vegetables, among which pulse are preferred. Although the type of pulse used is not limited, preferable examples of pulse species include one or more species selected from Pisum, Glycine, Phaseolus, Cajanus, Vigna, Vicia, Cicer, Lens, Lupinus, Lathyrus, Cyamopsis, Mucuna, Ceratonia, and Parkia species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans.

The composition of the present invention may preferably have a pulse content of no less than a predetermined value. Specifically, the content of pulse in the composition in terms of dry mass basis may preferably be 30 mass % or more, particularly 50 mass % or more, more preferably 70 mass % or more, particularly 90 mass % or more, and especially it may preferably be substantially 100 mass %. When the pulse content is below the lower limit mentioned above, the effects of the present invention may not be sufficiently exhibited.

When the composition of the present invention contains legumes, the form of the pulse is not limited. According to an aspect, the composition of the present invention may be a powdered composition which is mainly composed of pulse powder. According to another aspect, the composition of the present invention may be a solid composition made by preparing a dough mainly composed of pulse powder and solidifying the dough by gelatinization or other means. However, the composition of the present invention should not be limited to these embodiments but may be implemented in any embodiments. The composition of the present invention may contain pulverized pulse. The "pulverized pulse" herein refers to pulse having a particle diameter $d_{90}$ and/or dso of 1900 $\mu$m or less after ultrasonic treatment. The term also includes pulverized pulse melted in the composition as a result of processing and present in a molten state as an integral part of the composition.

*Other food ingredients:

In addition to the edible plant mentioned above, the composition of the present invention may also contain any one or more other food ingredients. Examples of such food ingredients include: plant food ingredients (e.g. vegetables, potatoes, mushrooms, fruits, algae, grains, seeds, etc.), animal food ingredients (e.g. seafood, meat, eggs, milk, etc.), and microbial food ingredients. The contents of these food ingredients may be set as appropriate so long as they do not impair the objective of the present invention.

*Seasonings and food additives:

The composition of the present invention may contain any one or more seasonings, food additives, etc., or the contents of these seasonings may be limited as explained above. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.
However, in view of the recent increase in nature consciousness, the composition of the present invention may preferably not contain any additives of any one category, more preferably any two categories, most preferably all three categories, of the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers"). The total content of food additives (in particular, the total content of "colorant," "thickening stabilizer," and "emulsifier") in the composition of the present invention may preferably be 1 mass % or less, more preferably 0 mass %.

*Dry basis water content (water content):

The composition of the present invention may preferably be characterized by having a dry basis water content (water content) of within a predetermined range. Specifically, the upper limit of the dry basis water content in the composition of the present invention is not limited, but it may preferably be 60 mass % or less, particularly 50 mass % or less, or 40 mass % or less, or 30 mass % or less, or 20 mass % or less, or 15 mass % or less. When the dry basis water content exceeds the upper limit mentioned above, the preservability of the composition may be worsened. On the other hand, the lower limit of the dry basis water content in the composition of the present invention is not limited, but from the viewpoint of industrial production efficiency, it may preferably be 0.5 mass % or more, or 1 mass % or more, or 2 mass % or more.
The water content in the composition of the present invention may either be derived from the ingredients of the composition and/or result from water added externally.
The "dry mass basis water content" herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 1]

$$\text{Dry basis water content (g/100g)} = (W_1 - W_2) / (W_2 - W_0) \times 100$$

In the formula, $W_0$ is the mass (g) of the pre-weighed weighing vessel, $W_1$ is the mass (g) of the weighing vessel with the sample before drying, and $W_2$ is the mass (g) of the weighing vessel with the sample after drying.

*Form of the Composition:

The composition of the invention may be made in any form. Examples include, but are not limited to: liquid forms (e.g., liquid compositions, dispersion compositions, suspension compositions, etc.), which do not have the property to retain a certain shape; and solid forms (e.g., wet semi-solid compositions, dry solid compositions, powder compositions, agglomerate compositions, etc.), which have the property to retain a certain shape. Preferred among these are solid compositions such as dry solid compositions, powdered compositions (or crushed compositions), and agglomerate compositions. These forms can be implemented by appropriately combining the steps and conditions for the production method of the present invention, which will be described below.

[Production Method of Edible Oil-and-Fat-Containing Composition]

The method for producing the composition of the present invention is not particularly limited, and may be any method depending on various conditions, such as the constitution of the composition. In general, the composition of the present invention in the form of a liquid, dispersion, suspension, or wet semi-solid composition, etc., can be produced by, e.g., dissolving or dispersing the materials for the composition of the present invention described above in an appropriate medium (e.g., water). The resulting solution or dispersion may also be dried as appropriate and, if necessary, heated or otherwise treated to obtain the composition of the present invention in the form of a wet semi-solid or solid composition, etc. These compositions can further be crushed, etc., as appropriate to produce a powder composition (or a crushed composition), which can then be agglomerated as appropriate to make an agglomerate composition.

According to one example, the composition of the present invention can be produced by a method including: mixing a food material containing oil and fat with other ingredients as desired; and adjusting the contents of hexanal, 1-hexanol, and 1-pentanol to satisfy Requirements (a) and (b) mentioned above.

The method for adjusting the contents of hexanal, 1-hexanol, and 1-pentanol to satisfy Requirements (a) and (b) mentioned above is not particularly limited. According to one example, the contents of hexanal, 1-hexanol, and 1-pentanol may be adjusted to satisfy Requirements (a) and (b) mentioned above by mixing one or more food materials containing oil and fat optionally with other ingredients. According to another example, the contents of hexanal, 1-hexanol, and 1-pentanol may be adjusted to satisfy Requirements (a) and (b) mentioned above by preparing one or more food materials containing oil and fat with a total content of 1-hexanol and 1-pentanol of 1 mass ppb or more, and subjecting them to gelatinization treatment.

In the following description, an example of a method for producing the composition of the present invention (hereinafter also referred to as "the production method of the present invention" as appropriate). However, it should be noted that the method for producing the composition of the present invention is not limited to this specific method in any way.

*Summary of the production method of the present invention:

The production method of the present invention include:

(i) preparing an oil-and-fat-containing dough composition with adjusting the insoluble dietary fiber, starch, and water contents to within the specific ranges mentioned above.

The production method of the present invention may also include:
(ii) kneading the composition from step (i) under predetermined high temperature conditions to adjust the contents of hexanal, 1-hexanol, and 1-pentanol while gelatinizing the composition to the specific range mentioned above.

The production method of the present invention may further include:
(iii) lowering the temperature of the composition from step (ii) to a predetermined temperature or less while preventing the composition from swelling.

The production method of the present invention may further include:

(iv) treating the composition from step (ii) or step (iii) with maintaining a dry basis water content of no less than a predetermined value with adjusting its resistant starch value to within the specific range mentioned above.

*Step (i): Preparation of an oil-and-fat-containing dough composition

In this step, a dough composition containing oil and fat is produced as the basis of the composition of the present invention. The dough composition is a mixture of the aforementioned materials for the composition of the present invention, including edible plant, especially pulse, and optionally other food materials, seasonings, and other ingredients used. The oil, fat, insoluble dietary fiber, starch, and water contents are adjusted to be within their respective ranges explained above.

When powdered edible plant, especially powdered pulse, is used as a raw material, the overall particle size of the material powder used for preparing the dough composition may preferably be within a predetermined range. Specifically, the particle diameter dso and/or $d_{90}$ of the powdered edible plant, especially powdered pulse, after ultrasonic treatment may preferably be less than 480 $\mu$m, particularly less than 450$\mu$m, less than 400$\mu$m, or less than 300$\mu$m, or less than 200$\mu$m, especially less than 100$\mu$m.

When powdered edible plant, especially powdered pulse, is used as a raw material, the particle diameter dso and/or $d_{90}$ of the whole powder after ultrasonic treatment may preferably be less than 480$\mu$m, particularly less than 450$\mu$m, or less than 400$\mu$m, or less than 300$\mu$m, or less than 200$\mu$m, especially less than 100$\mu$m. When the particle diameter dso and/or $d_{90}$ of the powdered edible plant, especially powdered pulse, is adjusted to below the aforementioned predetermined values, a composition having a smooth surface condition can be stably produced while suppressing powderiness upon consumption. Specifically, such an adjustment may be preferred when an extruder is used to produce the composition of the present invention (especially a composition having a visible surface condition with a dso and/or $d_{90}$ of 1000 $\mu$m or more), since this may serve to improve the discharge stability and result in a composition with less surface irregularities.

The terms "particle size dso" and "particle size $d_{90}$" of a sample herein refer to, when the particle size distribution of the sample is measured on a volume basis and divided into two parts at a certain particle size, the particle size at which the ratio between the cumulative value of the particle frequency % on the larger side to that on the smaller side are 50:50 and 10:90, respectively. The "ultrasonic treatment" herein refers to a treatment with ultrasonic waves of 40 kHz frequency at an output of 40 W for 3 minutes, unless otherwise specified. The specific conditions for measuring particle diameters (e.g., dso and $d_{90}$) after ultrasonic treatment can be the procedure described in the Examples below, using ethanol as the solvent.

The dry basis water content of the dough composition is not particularly limited and may preferably be set as appropriate in consideration of the dry basis water content of the final composition. However, as an example of a means to promote aging in step (iv) below, it is preferable to promote the formation of resistant starch by adding water in this step (i) or in any of the following steps (ii) or (iii) to adjust the dry basis water content in the dough composition to be above a specific value. The details for such a method will be explained later.

The starch content in the dough composition in terms of dry mass basis may preferably be 10 mass % or more, particularly 15 mass % or more, more preferably 20 mass % or more, or 25 mass % or more, or 30 mass % or more, particularly 35 mass % or more, or 40 mass % or more, or 45 mass % or more, especially 50 mass % or more. On the other hand, the upper limit of the starch content is not particularly limited, but in terms of dry mass basis, it may be 100 mass % or less, particularly 90 mass % or less.

The degree of gelatinization of the starch in the dough composition may preferably be 70% or less, particularly 60% or less, or 50% or less, more preferably 40% or less, particularly 30% or less, especially 20% or less. This makes it easier to achieve the effect of suppressing oxidized odors by spreading the fluidized starch throughout the composition and by homogenizing the distribution of hexanal and other substances in the composition. On the other hand, the lower limit of the degree of gelatinization of the starch is not particularly limited, and it may be 0% or more. The degree of gelatinization of the composition can be measured using the glucoamylase II method, and determined as the mass ratio of gelatinized starch content to the total starch content.

The resistant starch value of the dough composition is not particularly limited, but may preferably be more than 0%, particularly 0.5% or more, or 1.0% or more, more preferably 1.5% or more, especially 2.0% or more. On the other hand, the upper limit of the resistant starch value is not particularly limited, but may preferably be 60% or less, particularly 50% or less, more preferably 40% or less. The resistant starch value of a composition can be measured by the method described above.

*Step (ii): Kneading/gelatinization treatment under high-temperature conditions

In this step, the dough composition containing oil and fat obtained in the previous step (i) is then gelatinized under predetermined under high-temperature conditions while the contents of hexanal and 1-hexanol and/or 1-pentanol are adjusted. This step contributes to the effect of improving oxidized odor.

The gelatinization treatment of the dough composition may preferably be carried out while kneading the dough composition at high temperature. Specific conditions for the kneading may preferably be determined such that the specific mechanical energy (SME) value calculated by the following equation I is adjusted to within a predetermined range.

[Formula 2]

$$SME = \frac{\dfrac{N}{N_{\max}} \times \dfrac{\tau - \tau_{\text{empty}}}{100}}{Q} \times P_{\max} \times 3600$$

Equation I

N: Screw rotation speed during kneading (rpm)
$N_{\max}$: Maximum screw speed (rpm)
$\tau$: Kneading torque / maximum torque (%)
$\tau_{\text{empty}}$: Idling torque / maximum torque (%)
Q: Total mass flow rate (kg/hr)
$P_{\max}$: Maximum power of the agitator (e.g. extruder) (kW)

Specifically, the SME value with which the kneading is carried out may preferably be, although not limited to, 350 kJ/kg or more, particularly 400kJ/kg or more, more preferably 450kJ/kg or more, or 500kJ/kg or more, or 550kJ/kg or more, or 600kJ/kg or more, particularly 700kJ/kg or more, especially 800kJ/kg or more. When the SME value is adjusted to no less than this lower limit, the starch that has become fluid through the gelatinization treatment is likely to spread evenly throughout the composition, and hexanal and other ingredients are also likely to distribute uniformly throughout the composition, whereby the effect of suppressing oxidized odor tends to become more pronounced.

The screw rotation speed during kneading is not limited, but from the viewpoint of achieving the effects of the present invention, the screw rotation speed may preferably be set to above 150 rpm, especially above 200 rpm, and even more preferably above 250 rpm.

The temperature during kneading is not limited, but the kneading may preferably be carried out at a high temperature from the viewpoint of the efficiency to achieve desired effects. Specifically, the temperature of the dough composition may preferably be set at typically 100°C or more, particularly 110°C or more, more preferably 120°C or more. Such high temperatures may be useful especially when starch derived from pulse or seeds is used. On the other hand, while there is no limit to the upper limit of the temperature, it may preferably be 200°C or less, especially 190°C or less, more preferably 180°C or less, particularly 170°C or less, especially 160°C or less.

Although the pressurization conditions during kneading are not limited, but the kneading may preferably be carried out under high pressure from the viewpoint of the efficiency to achieve desired effects. Specifically, the pressure during kneading (the pressure to be applied in addition to atmospheric pressure) may preferably be 0.1 MPa or more, especially 0.3 MPa or more, and even 0.5 MPa or more, particularly 1 MPa or more, or 2 MPa or more, especially 3 MPa or more. The upper limit of the pressure is not particularly limited, but it may be 50 MPa or less, for example. The pressure during kneading refers to the pressure at the kneading site, which can be determined by measuring the outlet pressure when using an extruder that does not have an opening in the middle and can knead until near the outlet.

When an extruder is used for kneading, the ratio of the feed volume to the interior volume of the extruder may preferably be set at typically 0.06g/min►cm³ or more, particularly 0.07g/min►cm³ or more, or 0.08g/min►cm³ or more, or 0.09g/min►cm³ or more, or 0.10g/min►cm³ or more, or 0.13g/min►cm³ or more, or 0.15g/min►cm³ or more, or 0.20g/min►cm³ or more' more preferably 0.25g/min►cm³ or more' especially 0.35g/min►cm³ or more. On the other hand, the upper limit of the ratio of the feed volume to the interior volume of the extruder is not specified, but it may typically be 5.00g/min►cm³ or less. The interior volume of the extruder herein refers to the volume in the barrel when the screw is removed, and can be calculated from the geometry of the screw. For example, in the case of a biaxial extruder with a screw diameter of 11 mm and a screw length of 41 cm, the interior volume of the extruder is calculated as approximately 77.88 cm³ (0.55 cm × 0.55 cm × 3.14 × 41 cm × 2 screws).

When an extruder is used for kneading, the L/D ratio of the extruder may preferably be 25 or more, particularly 30 or more, more preferably 35 or more, particularly 40 or more. When the L/D ratio of the extruder is no less than the lower limit mentioned above, it tends to be possible to stably produce a composition with a smooth surface while improving powderiness at the time of consumption. On the other hand, the upper limit of the L/D ratio of the extruder is not particularly limited, but it may preferably be 300 or less, particularly 200 or less, more preferably 100 or less. The L/D ratio of an extruder herein refers to the ratio of D (the diameter of the screw) to L (the length of the screw) of the extruder. In this regard, it is more preferred to use an extruder whose ratio of the feed volume to the interior volume and whose L/D value are adjusted to within their respective predetermined ranges mentioned above, in combination with a raw material (pulverized pulse) whose dso after ultrasonic treatment is adjusted to no more than the predetermined upper limit mentioned above. This is because it may become easier to stably produce a composition with a smooth surface while improving powderiness at the time of eating.

The time of kneading may be determined as appropriate in view of various factors, such as the temperature and pressure during kneading, the size of the kneading vessel, etc. In particular, since the amount of heat applied to the composition varies greatly depending mainly on the characteristics of the equipment used, it is preferable to method the composition so that the physical properties of the composition (especially insoluble and/or soluble ingredients) after processing are adjusted to a predetermined range. In general, however, the lower limit of kneading time may be set at typically 0.1 minutes or more, preferably 0.2 minutes or more, more preferably 0.3 minutes or more, more preferably 0.5 minutes or more, more preferably 0.7 minutes or more, more preferably 1 minutes or more, still preferably 2 minutes or more. The upper limit of the kneading time may be set at typically 60 minutes or less, preferably 30 minutes or less, more preferably 15 minutes or less.

The gelatinization treatment of the composition at this step may preferably be carried out so that the increase ratio of the degree of gelatinization in the composition during the gelatinization treatment may typically be more than 0%, particularly 10% or more, or 20% or more, more preferably 30% or more, more preferably 40% or more, especially 50% or more. On the other hand, the upper limit for the increase ratio of the degree of gelatinization in the composition during the gelatinization treatment is not particularly limited, but it may preferably be typically 100% or less, particularly 90% or less, more preferably 80% or less. The increase ratio of the degree of gelatinization in the composition during the gelatinization treatment herein refers to the ratio of the increase in the degree of gelatinization in the composition after the gelatinization treatment when the degree of gelatinization before the gelatinization treatment is set at 100%.

The contents of hexanal and 1-hexanol and/or 1-pentanol in the composition may be adjusted before the gelatinization treatment, during the gelatinization treatment, or after the gelatinization treatment. The method for the adjustment is not limited, but one example is to add hexanal externally to the composition. However, in the present invention, it is preferable to use a method to adjust the contents of hexanal and 1-hexanol and/or 1-pentanol to their respective desired ranges by changing a part of the volume(s) of 1-hexanol and/or 1-pentanol to hexanal by subjecting the oil-and-fat dough composition containing 1-hexanol and/or 1-pentanol to a gelatinization treatment under the high-temperature and high-pressure conditions mentioned above. In other words, the hexanal contained in the composition of the present invention may be derived from a food material such as edible plant used as a raw material, may be added separately from any food materials, or may be generated during the production method of the composition of the present invention, as long as the total content and/or the ratios of these aroma ingredients are adjusted to within their respective predetermined ranges mentioned above. When hexanol is added to the composition separately from any food materials, hexanal may be used in the form of any composition or may be a highly purified reagent that has been purified and extracted. The same also applies to 1-hexanol and 1-pentanol.

At least the steps (i) and (ii) mentioned above will result in the oil-and-fat containing composition of the present invention. Thus, subjecting the oil-and-fat-containing dough composition to a gelatinization treatment with adjusting the hexanal content and the 1-hexanol and/or 1-pentanol content(s) to within their respective ranges allows for production of an oil-and-fat-containing composition with suppressed oxidized odor. This is a surprising finding that has been completely unknown so far.

The production method of the present invention have only to include at least the steps (i) and (ii) mentioned above, but may also include optionally the step (iii) below, more preferably in combination step (iv) below, since these steps may improve the properties of the resulting oil-and-fat-containing composition further.

*Step (iii): Cooling treatment

If the composition kneaded under high temperature conditions in step (ii) above is depressurized without lowering the temperature, water in the composition may rapidly evaporate and cause the composition to swell. Therefore, after the high-temperature kneading in step (ii), it is preferable to provide the step of lowering the temperature of the composition so that the composition does not swell (step (iii)).

The target temperature of the cooling treatment in this step is not limited, but from the viewpoint of preventing rapid evaporation of water in the composition, the temperature may preferably be lowered to less than 110°C, particularly less than 105°C, more preferably less than 102°C, and especially less than 100°C.

The cooling treatment in this step may preferably be performed under constant pressurization conditions. In this case, the pressurization conditions during the cooling treatment are not restricted as long as swelling of the composition can be prevented, but the pressure applied during the cooling treatment may preferably be the same as that pressure during the kneading method. Specifically, the lower limit of the pressure to be applied during the cooling treatment (the pressure to be applied in addition to atmospheric pressure) may preferably be 0.1 MPa or more, particularly 0.3 MPa or more, more particularly 0.5 MPa or more, especially 1 MPa or more, or 2 MPa or more. MPa or more, especially 1 MPa or more, or 2 MPa or more, especially 3 MPa or more. On the other hand, the upper limit of the pressure to be applied during the cooling treatment is not limited, but may be 50MPa or less, or 30MPa or less, or 15MPa or less, or 10MPa or less.

In consideration of this treatment, it is preferred that the composition of the present invention is not a swollen food (especially not a swollen food whose density specific gravity is less than 1.0 due to swelling).

After lowering the temperature while preventing swelling, the pressure may usually be reduced to about atmospheric pressure to thereby obtain the composition of the present invention.

The steps (i) to (iii) mentioned above enable efficient production of the composition of the invention. These steps (i) to (iii), especially the high-temperature kneading treatment (in step (ii) above) and the cooling treatment (in step (iii) above may preferably be carried out using an extruder. Using an extruder for performing steps (ii) and (iii) above usually obviates the means to control and adjust the pressure to within the aforementioned range, and also helps efficiently control and maintain the temperature to within the aforementioned range. Therefore, the use of an extruder makes it possible to produce the composition of the present invention more efficiently and conveniently.

*Step (iv): Aging treatment

The composition after step (ii) or step (iii) mentioned above may be used as the composition of the present invention without any additional treatment. However, to adjust the resistant starch value to within the aforementioned predetermined range while maintaining the dry basis water content at above the predetermined limit, it may be preferred to carry out an aging treatment as step (iv), as this will serve to obtain a composition in which at least at the solid surface starch has been aged.

Specifically, the reduction rate in the degree of gelatinization of the composition during this step (iv) relative to the composition after kneading in step (ii) may preferably be 6% or more (i.e., the aging treatment may preferably be carried out until the degree of gelatinization is reduced by 6% or more). The reduction rate in the degree of gelatinization of the composition may preferably be particularly 7% or more, or 8% or more, or 9% or more, especially 10% or more. On the other hand, the upper limit of the reduction rate in the degree of gelatinization of the composition during this step (iv) is not particularly limited, but it may typically be 50% or less.

The degree of gelatinization in the composition after the reduction in step (iv) may preferably be no more than a predetermined value. Specifically, the degree of gelatinization in the composition after step (iv) may preferably be 90% or less, particularly 85% or less, more preferably 80% or less, or 75% or less, or 70% or less. The lower limit is not particularly limited, but the degree of gelatinization in the composition after step (iv) may preferably be 10% or more, particularly 20% or more, more preferably 30% or more, particularly 40% or more, especially 50% or more.

Although the means to achieve the aging in this step (iv) is not particularly limited, it is possible to age the starch near the surface of the composition and thereby achieve this step (iv) by, e.g., performing the water retention treatment described below, either as a treatment in the kneading and subsequent sections of the extruder, or as a post-treatment after the extruder treatment is complete. Specifically, it may be preferred to adjust the period of time after step (ii), the time duration during which the composition is maintained with a dry basis water content of 25 mass % or more after the composition temperature drops below 90°C (the lower limit of which temperature is not particularly limited, but may typically be above 0°C, or above 4°C) may be adjusted to typically 0.1 hours or more, particularly 0.2 hours or more, more preferably 0.3 hours or more, or 0.4 hours or more, or 0.5 hours or more, or 0.6 hours or more, or 0.7 hours or more, or 0.8 hours or more, or 0.9 hours or more, especially 1.0 hours or more. The upper limit of the time duration is not particularly limited, but it may be adjusted to typically 20 hours or less, more preferably 15 hours or less.

Alternatively, the aging in step (iv) may be achieved inside the extruder at step (iii) and afterword, may be achieved at any steps after extrusion from the extruder, or may be achieved in a combination of treatments inside and outside the extruder.

The temperature of the composition in step (iv) is not limited, but may preferably be typically 90°C or less, particularly 80°C or less, more preferably 70°C or less, especially 60°C or less. The lower limit is not particularly limited, but the temperature may be more than 0°C or more than 4°C. The pressure in step (iv) is also not particularly limited, but it may be performed, e.g., under normal pressure (atmospheric pressure).

As an exemplary means to promote the aging described above, it is preferable to add water in any of the steps (i) to (iii) mentioned above in order to adjust the dry basis water content in the dough composition before the kneading and gelatinization treatment under high temperature conditions in step (ii) above and/or in the composition after such treatments (hereinafter referred to as "the pre/post kneading and gelatinization treatment composition") to above a predetermined value, since this treatment can promote the formation of resistant starch. Specifically, the dry basis water content of the pre/post kneading and gelatinization treatment composition may preferably be adjusted to more than 47 mass %, particularly more than 48 mass %, particularly more than 49 mass %, especially more than 50 mass %. On the other hand, the upper limit of the dry basis water content is not particularly limited, but it may be adjusted to typically 300 mass % or less, or 200 mass % or less, or 175 mass % or less, or 150 mass % or less, or 125 mass % or less, or 100 mass % or less. The adjustment of the dry basis water content of the dough composition may be performed at step (i) above or at step (ii) or any subsequent step (e.g., at step (iii) or step (iv)) as described above. However, if the dry basis water content is adjusted by addition of liquid water, it is preferable to add water to the dough composition at step (i) above, preferably in advance in advance at feeder loading. When water is added to the pre/post kneading and gelatinization treatment composition, water may be added in the state of liquid water or in the state of high humidity gas such as steam, heated steam, or mist. Above all, when water is added to the dough composition before the kneading and gelatinization treatment (more specifically, the composition of step (i) above), it is preferable to carry out the addition of water using liquid water. On the other hand, when water is added to the composition after the kneading and gelatinization treatment (more specifically, the composition after step (ii) or step (iii) above), it is preferable to add water using a high humidity gas (specifically, a gas with a relative humidity of more than 50 RH%) such as steam, heated steam, or mist.

Generally, for the sole purpose of gelatinizing starch, it is sufficient to adjust the dry basis water content in the dough composition to about 40% by mass or less. Considering the subsequent drying step, a person skilled in the art would not be motivated, or would rather be discouraged, to add water further (more specifically, to adjust the dry basis water content in the dough composition at step (i) to more than 47 mass %), especially in order to avoid the generation of deteriorated odors. Therefore, it would be difficult to arrive at the idea of increasing the dry basis water content in the dough composition as in step (iv) of the present invention, without having the inventive concept of aging once gelatinized starch to produce resistant starch. Further, even when conceiving of the idea of simply increasing the dry basis water content in the dough composition, it would still be difficult to adjust the time duration after the temperature of the composition drops below a predetermined limit until the dry basis water content in the composition decreases to below 25 mass %, without having the inventive concept of retaining water and producing resistant starch as in step (iv) of the present invention, which is opposite to the usual idea of drying the composition afterwards.

The specific means for adjusting the water content in the composition is not limited, but it may be preferred to add water during the preparation of the paste dough composition at step (i) above. The addition of water may be carried out either in the form of liquid water or in the form of a high humidity gas such as steam, heated vapor, or mist, but it is preferred to add water in the form of liquid water. If an extruder is used, at least a certain percentage of the total amount of water to be added during the production method may preferably be mixed with other ingredients before the extruder is heated by 20°C or more, since this may prevent the starch from changing its properties due to overheating. Specifically, typically 50 mass % or more, particularly 60 mass % or more, more preferably 70 mass % or more, or 80 mass % or more, or 90 mass % or more, especially substantially 100 mass %, of the total amount of water to be added during production may preferably be mixed with other raw materials before the extruder is heated by 20°C or more. When water is mixed with other raw materials, it may be preferred to pre-mix the aforementioned percentage of water before the raw materials are fed into the extruder.

It is also possible to use a method in which water is added to the composition after extrusion by an extruder at step (iii) or any subsequent step (specifically at step (iv)) to thereby increase the period of time until the dry basis water content in the composition decreases to below 25 mass % to no less than the predetermined limit mentioned above. The addition of water can be performed either using liquid water or using high humidity gas such as steam, heated steam, or mist, among which liquid water is preferred. Furthermore, even once the dry basis water content in the composition has fallen below 25 mass%, water retention treatment can be performed by re-hydrating the dried composition to increase the dry basis water content so as to adjust the total period of time during which the dry basis water content is 25 mass % or more to no less than the predetermined limit mentioned above. When re-hydrating the dried composition, the temperature for the majority of the subsequent water retention time may preferably be 60°C or less, or 50°C or less, even more preferably 40°C or less.

It is also possible to use a method in which high humidity gas or other means is used to increase the ambient humidity surrounding the composition after extrusion by the extruder at step (iii) or any subsequent step (specifically at step (iv)) to thereby increase the period of time until the dry basis water content in the composition decreases to below 25 mass % to no less than the predetermined limit mentioned above. Although in general, the starch near the surface of the composition normally loses water quickly and is less likely to age than the interior of the composition, this method may cause the starch near the composition surface age locally, such that when the resulting composition is made in the form of multiple pieces eaten together, such as noodles, they are prevented from binding together and are easy to eat. Specifically, it is also possible to use a method in which the composition after extruded from the die section of the extruder is stored in a high humidity environment (e.g., above 50 RH%) or is sprayed with mist or other high humidity gases (also called wetting treatment) to achieve a predetermined amount of reduction in the degree of gelatinization as mentioned above.

The specific method for carrying out the aging treatment method is not limited and may be any method. However, it may be preferable to use a method in which the dry basis water content in the composition is maintained at a predetermined value or more for a certain period of time or more. An example of such treatment is wetting treatment. Wetting treatment may be carried out by using a closed device with a constant humidity, by using a device supplying an atmosphere with a constant humidity, by holding water vapor evaporating from the composition in the vicinity of the composition to maintain a certain level of relative humidity, or using a combination of any of these methods.

When lowering the dry basis water content in the composition, the wetting treatment may be performed before lowering the dry basis water content. Although it may be carried out after lowering the dry basis water content, it is preferable to carry out the wetting treatment before lowering the dry basis water content since the effects of the present invention may become more pronounced.

Specifically, the wetting treatment of the composition after step (iii) may preferably be carried out under conditions satisfying the following formula.

[Formula 3]

$$A \times T \geq B$$

In the formula, A represents the relative humidity of the atmosphere (RH%) and T represents the wetting treatment time (hr), provided that A > 50 RH%.

For example, if the atmosphere relative humidity is 95 RH% (A) and the wetting treatment time is 1 hour (T), then $A \times T = 95$.

The wetting treatment may preferably be carried out under such conditions that the lower limit of $A \times T$ in [Formula 3] above, i.e., B, is 40 (i.e., $A \times T \geq 40$). B may preferably be 50 (i.e., $A \times T \geq 50$), more preferably 60 (i.e., $A \times T \geq 60$), still more preferably 70 (i.e., $A \times T \geq 70$), even preferably 80 (i.e., $A \times T \geq 80$), especially 90 (i.e., $A \times T \geq 90$).

The wetting treatment may preferably be carried out in such a manner that the dry basis water content in the composition is no less than a predetermined limit, for example, 20 mass % or more, particularly 25 mass % or more, more preferably 30 mass % or more.

The relative humidity (A) of the atmosphere during the wetting treatment may be above 50 RH%, preferably above 60 RH%, more preferably above 70 RH%, still more preferably above 80 RH%, even more preferably above 90 RH%.

Although the temperature during the wetting treatment is not particularly limited, in general, the wetting treatment may be preferably carried out with a composition temperature of 4°C or more, more preferably 30°C or more, especially 60°C or more, since the effects of the present invention may become more pronounced. The upper limit of the composition temperature may preferably be 99°C or less, more preferably 95°C or less, still more preferably 90°C or less, even more preferably 80°C or less, especially 70°C or less.

The ambient temperature during the wetting treatment may preferably be 30°C or more, since the saturated water vapor content in the atmosphere may increase, whereby the effects of the present invention may become more pronounced even at the same relative humidity. The ambient temperature during the wetting treatment may more preferably be 40°C or more, more preferably 50°C or more, still more preferably 60°C or more.

The wetting treatment may be more desirable because the resulting oil-and-fat-containing composition and the food product containing said composition may have an enhanced flavor release when consumed. More specifically, in general, when the composition after step (iii) is cooked in a heated liquid for eating, the resulting composition may easily lose its flavor release property during storage. However, the wetting treatment of the composition may preferably help maintain the composition retain its flavor release property.

The aging treatment may preferably be carried out such that the increase rate of the resistant starch value of the composition during the aging treatment is above 0%, more preferably 5% or more, or 10% or more, or 20% or more, or 30% or more, or 35% or more, or 40% or more, or 45% or more, or 50% or more, particularly 80% or more, or 90% or more, especially 100% or more. The increase rate of the resistant starch value of a composition herein refers to a rate obtained by dividing the difference in the resistant starch value of the composition between before and after the aging treatment ("the resistant starch value of the composition after the aging treatment" - "the resistant starch value of the composition before the aging treatment") by the resistant starch value before the aging treatment.

*Post-treatment

The composition of the present invention may be subjected to optional post-treatment as appropriate.

Specifically, the composition of the present invention may preferably be subjected to drying treatment. The method for drying may be any methods commonly used for drying food products. Examples include sun drying, shade drying, air drying (e.g., hot-air drying, fluidized-bed drying, spray drying, drum drying, low-temperature drying, etc.), pressure drying, vacuum drying, microwave drying, oil-heat drying, etc. Preferred among these include air drying (e.g., hot-air drying, fluidized-bed drying, spray drying, drum drying, low-temperature drying, etc.), since it tends to cause relatively little change in color tone and flavor inherent in plants and also enables control of non-food aroma (burnt smell, etc.) relatively easily.

The composition of the present invention can be made into a solid composition in a "dry" state via drying treatment. The "dry" state herein refers to a state in which the dry basis water content on a dry weight basis is 20% or less.

When the composition of the present invention is dried, the drying may preferably be carried out until the water activity value of the composition is reduced to 0.95 or less, particularly 0.90 or less, more preferably 0.85 or less, particularly 0.80 or less, especially 0.75 or less. The water activity value herein refers to the percentage of free water in a food, and is used as an indicator of food shelf life. Specifically, the water activity value is calculated by dividing the vapor pressure at equilibrium (p) of the headspace above the sample divided by the vapor pressure of water at the same temperature (po), or by dividing the equilibrium relative humidity (ERH) of the headspace divided by 100. The water activity value can be measured using a common water activity measuring device (e.g., Novacina's LabMaster-aw NEO, which uses an electrical resistance (electrolyte) humidity sensor).

The oil-and-fat-containing composition of the present invention may be used after being crushed. In other words, the production method of the present invention may include, after the cooling in step (iii) or the aging treatment in step (iv) above, the additional step (v) of crushing the composition to produce a crushed composition. The crushed product of the composition of the present invention thus obtained (also referred to as "the crushed composition of the present invention," "composition crushed product," or simply as "crushed composition" as appropriate) can also maintain the preferred effects of the composition of the present invention despite the change in its shape, and should therefore be included in the subject to the present invention. When the composition of the present invention is crushed to generate the crushed composition of the present invention, the crushing conditions are not restricted and are arbitrary, but the composition may preferably be crushed in such a manner that the d90 and/or d50 of the crushed product is about 100 $\mu$m or less. More specifically, it is preferable that the particle diameter d50 and/or d90 of the crushed composition after ultrasonic treatment may preferably be less than 480 $\mu$m, more preferably less than 450 $\mu$m, particularly less than 400 $\mu$m, or less than 300 $\mu$m, or less than 200 $\mu$m, especially less than 10$\mu$m. The lower limit is not particularly limited, but can usually be 1 $\mu$m or more, especially 5 $\mu$m or more.

It is also preferred to make the composition of the present invention into a powdered composition (the crushed composition of the present invention) by pulverizing the composition of the present invention in a solid dried state. In this case, the crushing means used for powdering the solid dry composition is not limited and may be any method.

The crushed composition of the present invention may also be used as a raw material and re-subjected to the strong kneading treatment under high temperatures according to the production method of the present invention to thereby prepare an agglomerate. In other words, the production method of the present invention may include, after the crushing in step (v) above, additional step (v) of agglomerating the crushed composition to produce an agglomerate of the crushed composition. The agglomerate of the crushed composition of the present invention thus obtained (also referred to as "the crushed composition agglomerate of the present invention" as appropriate) can also maintain the preferred effects of the composition of the present invention despite the change in its shape, and can therefore be used as the oil-and-fat-containing composition of the present invention. Accordingly, the crushed composition agglomerate of the present invention should be included in the subject to the present invention.

When the composition is crushed to produce the crushed composition of the present invention, the means for the crushing treatment is not limited as mentioned above. The temperature during crushing is also not limited, and may be high-temperature crushing, room-temperature crushing, or low-temperature crushing. The pressure during crushing is also not limited, and may be high pressure, normal pressure, or low pressure. Examples of devices for the crushing method include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

[Food Containing the Oil-and-Fat-Containing Composition]

Another aspect of the present invention relates to food products containing various forms of the composition of the present invention described above, i.e., an oil-and-fat-containing composition, crushed oil-and-fat-containing composition, and/or crushed oil-and-fat-containing composition agglomerate. Such food products may be made solely from any form of the composition of the present invention described above as they are, or may be made by adding other ingredients or components to the composition of the present invention, or may be prepared by adding any form of the composition of the present invention to another food product. Whichever form of food products is adopted, a desirable food product can be obtained that demonstrates the present invention's effect of suppressing the oxidized odor of oil and fat caused by 1-hexanol and 1-pentanol.

As explained above, the composition of the present invention mainly composed of pulse may preferably have, in addition to the effect of suppressing the oxidized odor of oil and fat, the property of suppressing leaching of components in water by aging the surface of the composition or by containing a specified amount or more of resistant starch. Therefore, the composition of the present invention may preferably be a composition for heat cooking suitable for heat cooking in liquid (especially in water), which is a cooking environment where such elution of ingredients tends to occur. The solid paste composition for heat cooking of the present invention may preferably be a composition in the form of, e.g., noodles or noodle-like strings or strips such as pasta, since the solid paste composition of the present invention has the property of retaining its edible shape even after heat cooked in water for eating (e.g., more than 5 minutes in water at a temperature of 90°C or more).

Examples of the composition of the present invention include, although not limited to: pasta, Chinese noodles, udon (Japanese wheat-flour noodles), inaniwa udon, kishimen, houtou, suiton, hiyamugi, somen (variations of udon), soba (Japanese buckwheat-flour noodles), soba gaki (Japanese buckwheat-flour paste), bee-hun (rice vermicelli), pho, reimen (Korean cold noodles), vermicelli, oatmeal, couscous, kiritanpo (variation of Japanese rice cake in an elongate shape), tteok, and gyoza skins.

Examples of pastas include long pasta and short pasta.

The term "long pasta" is typically a generic term referring to long, thin pasta, but may also be used herein in a broader meaning encompassing udon and soba noodles. Specific examples include, although not limited to, spaghetti (diameter: 1.6 mm to 1.7 mm), spaghettini (diameter: 1.4 mm to 1.5 mm), vermicelli (diameter: 2.0 mm to 2.2 mm), cappellini (diameter: 0.8 mm to 1.0 mm), linguini (short diameter: about 1 mm, long diameter: about 3 mm), tagliatelle or fettuccine (short diameter: about 1 mm, long diameter: about 3 mm), and other types of pasta. diameter: about 1 mm, long diameter: about 3 mm), tagliatelle or fettuccine (flat noodles of about 7 mm to 8 mm in width), pappardelle (flat noodles of about 10 mm to 30 mm in width), etc.

The term "short pasta" is typically a general term referring to short pasta, but may also be used herein in a broader meaning encompassing product once shaped in long pasta and then processed into smaller sizes, such as fregola (granular pasta) and couscous. Examples include, although not limited to, macaroni (cylindrical shape with a diameter of about 3 to 5 mm), penne (cylindrical shape with both ends cut diagonally like the tip of a pen), farfalle (shaped like a butterfly), conchiglie (shaped like a seashell), and orecchiette (dome-shaped like an ear), etc.

## EXAMPLES

The present invention will now be described in further detail by way of Examples. These examples are shown merely for convenience of the description, and should not be construed as limitations to the present invention in any sense.

[Method of Preparing Oil-and-Fat-Containing Composition]

An oil-and-fat-containing composition sample in each of the Test Examples, Comparative Examples, and Reference Examples was produced by preparing a dough composition having a specific constitution, kneading the dough composition for gelatinization, and post-processing it for aging.

Each dough composition was prepared using pulverized pulse having the constitution and physical properties indicated in the "Dough Composition Conditions" columns in Table 1 below as raw material powder.

The gelatinization was performed by kneading the prepared dough composition using a biaxial extruder under the conditions described in the "Gelatinization Conditions" columns in Table 2 below. HAAKE Process 11, marketed by Thermo Fisher Scientific, Inc. (screw diameter: 11 mm × 2; screw length: 41 cm; segmented, co-rotating twin screws) was used as the biaxial extruder. No venting was performed during processing, and the temperature was lowered while kneading was performed until near the exit, and the exit pressure was measured as the "pressurized condition."

Aging was performed by applying the post-treatment described in the "Specific Aging Treatment" column of "Aging Conditions" in Table 2 below to each composition of the Test Examples, Comparative Examples, and Reference Examples after gelatinization. In each cell of "Specific Aging Treatment Methods," "Water immersion" refers to immersing the composition in water at room temperature for 1 second after gelatinization, "Wet treatment" refers to immersing the composition in water at 100% relative humidity RH, 30°C for 1 hour, "Room-temperature drying" refers to drying at 20°C for 24 hours, and "Drying at 40°C for 24 hours" refers to drying the composition after gelatinization at a constant temperature of 40°C for 24 hours in order to avoid aging.

The oil-and-fat-containing composition samples of Test Examples 1-1 to 1-17 and Comparative Examples 1-1 to 1-5 were prepared by; preparing common oil-and-fat-containing composition samples having the same constitution according to the same production method; and adding a standard product of each aroma component (hexanal: Tokyo Kasei Kogyo; 1-hexanol: Tokyo Kasei Kogyo; 1-pentanol: Fujifilm Wako Pure Chemicals) to the common oil-and-fat-containing composition samples at various different concentration ratios.

The dough preparation conditions for the oil-and-fat-containing composition samples are shown in Table 1, and the gelatinization and aging conditions for the oil-and-fat-containing composition samples are shown in Table 2.

[Table 1-1]

| Table 1 | | | Test Examples | Comparative Examples | Test Example | Test Example | Test Example | Test Example |
|---|---|---|---|---|---|---|---|---|
| | | | 1-1 to 1-17 | 1-1 to 1-5 | 2-1 | 2-2 | 2-3 | 2-4 |
| Dough Composition Conditions | Raw material powder (type) | | Yellow pea | | Yellow pea | White pea | Chick pea | Yellow pea |
| | Particle size $D_{50}$ of raw material powder after ultrasonic treatment | µm | 100 | | 98 | 180 | 311 | 125 |
| | Insoluble dietary fiber content | mass % | 5.6 | | 5.6 | 12.2 | 11.1 | 4.2 |
| | Starch content | mass % | 37.5 | | 37.5 | 28.0 | 26.1 | 28.2 |
| | Protein content | mass % | 11.8 | | 11.8 | 15.0 | 14.0 | 8.9 |
| | Total oil-and-fat content | mass % | 2.0 | | 2.0 | 1.7 | 3.8 | 1.5 |
| | Dry basis water content | mass % | 50.1 | | 50.1 | 50.1 | 50.1 | 100 |
| | Degree of gelatinization | % | 13 | | 12 | 10 | 13 | 13 |

[Table 1-2]

| Table 1 | | | Test Example | Reference Example | Test Example | Test Example | Test Example | Reference Example |
|---|---|---|---|---|---|---|---|---|
| | | | 2-5 | 2-1 | 2-6 | 2-7 | 2-8 | 2-2 |
| Dough Composition Conditions | Raw material powder (type) | | Yellow pea | Yellow pea | Yellow pea | Yellow pea | Yellow pea | Yellow pea |
| | Particle size $D_{50}$ of raw material powder after ultrasonic treatment | μm | 154 | 98 | 65 | 98 | 450 | 480 |
| | Insoluble dietary fiber content | mass % | 2.8 | 5.6 | 5.6 | 5.6 | 5.6 | 6.3 |
| | Starch content | mass % | 18.8 | 37.5 | 37.5 | 37.5 | 37.5 | 42.3 |
| | Protein content | mass % | 5.9 | 11.8 | 11.8 | 11.8 | 11.8 | 13.3 |
| | Total oil-and-fat content | mass % | 1.0 | 2.0 | 2.0 | 2.0 | 2.0 | 2.3 |
| | Dry basis water content | mass % | 200 | 50.1 | 50.1 | 50.1 | 50.1 | 33.3 |
| | Degree of gelatinization | % | 13 | 13 | 13 | 13 | 13 | 13 |

[Table 1-3]

| Table 1 | | | Reference Example 2-3 | Reference Example 2-4 | Test Example 2-9 | Test Example 2-10 | Test Example 2-11 | Test Example 2-12 |
|---|---|---|---|---|---|---|---|---|
| Dough Composition Conditions | Raw material powder (type) | | Yellow pea | Yellow pea | Yellow pea | Yellow pea | Yellow pea | Yellow pea |
| | Particle size $D_{50}$ of raw material powder after ultrasonic treatment | μm | 480 | 98 | 56 | 82 | 15 | 40 |
| | Insoluble dietary fiber content | mass % | 6.3 | 5.6 | 5.6 | 5.6 | 5.6 | 5.6 |
| | Starch content | mass % | 42.3 | 37.5 | 37.5 | 37.5 | 37.5 | 37.5 |
| | Protein content | mass % | 13.3 | 11.8 | 11.8 | 11.8 | 11.8 | 11.8 |
| | Total oil-and-fat content | mass % | 2.3 | 2.0 | 2.0 | 2.0 | 2.0 | 2.0 |
| | Dry basis water content | mass % | 33.3 | 50.1 | 50.1 | 50.1 | 50.1 | 50.1 |
| | Degree of gelatinization | % | 13 | 13 | 13 | 13 | 13 | 13 |

[Table 1-4]

| Table 1 | | | Test Example | Test Example | Reference Example | Reference Example |
|---|---|---|---|---|---|---|
| | | | 2-13 | 2-14 | 2-5 | 2-6 |
| Dough Composition Conditions | Raw material powder (type) | | Yellow pea | Yellow pea | Yellow pea | Yellow pea |
| | Particle size $D_{50}$ of raw material powder after ultrasonic treatment | μm | 27 | 9 | 65 | 65 |
| | Insoluble dietary fiber content | mass % | 5.6 | 5.6 | 5.6 | 5.6 |
| | Starch content | mass % | 37.5 | 37.5 | 37.5 | 37.5 |
| | Protein content | mass % | 11.8 | 11.8 | 11.8 | 11.8 |
| | Total oil-and-fat content | mass % | 2.0 | 2.0 | 2.0 | 2.0 |
| | Dry basis water content | mass % | 50.1 | 50.1 | 45.0 | 45.0 |
| | Degree of gelatinization | % | 13 | 13 | 13 | 13 |

[Table 2-1]

| Table 2 | | | Test Examples | Comparative Examples | Test Example | Test Example | Test Example | Test Example |
|---|---|---|---|---|---|---|---|---|
| | | | 1-1 to 1-17 | 1-1 to 1-5 | 2-1 | 2-2 | 2-3 | 2-4 |
| Gelatinization conditions | Kneading temperature (highest temperature) | °C | 120 | | 120 | 120 | 120 | 120 |
| | Outlet temperature | °C | 75 | | 75 | 90 | 95 | 75 |
| | Feed amount (water + powder) | g/min | 5.5 | | 15 | 15 | 15 | 20 |
| | Ratio of feed volume to interior volume of extruder | g/min ·cm³ | 0.07 | | 0.19 | 0.19 | 0.19 | 0.26 |
| | L/D | | 40 | | 40 | 40 | 40 | 40 |
| | SME | kJ/kg | 2181 | | 760 | 634 | 591 | 507 |
| | Pressurized condition | MPa | 1 | | 2 | 8 | 2.4 | 2.8 |
| | Discharge stability | | Stable | | Stable | Stable | Stable | Stable |
| | Degree of gelatinization | % | 65 | | 65 | 52 | 82 | 68 |
| | Increase ratio of degree of gelatinization during gelatinization treatment | % | 52 | | 53 | 42 | 69 | 55 |
| Aging conditions | Specific aging method | | Water immersion --> Drying at room temperature | | Water immersion --> Drying at room temperature | Drying at room temperature | Drying at room temperature | Drying at room temperature |
| | Resistant starch | % | 3.81 | | 3.81 | 2.32 | 2.2 | 3.2 |
| | Increase ratio of resistant starch during aging treatment | % | 88.6 | | 88.6 | 14.9 | 8.9 | 58.4 |

[Table 2-2]

| Table 2 | | | Test Example | Reference Example | Test Example | Test Example | Test Example | Reference Example |
|---|---|---|---|---|---|---|---|---|
| | | | 2-5 | 2-1 | 2-6 | 2-7 | 2-8 | 2-2 |
| Gelatinization conditions | Kneading temperature (highest temperature) | °C | 120 | No external heating (room temperature) | 120 | 120 | 120 | 120 |
| | Outlet temperature | °C | 75 | 75 | 75 | 75 | 75 | 90 |
| | Feed amount (water + powder) | g/min | 30 | 15 | 15 | 15 | 15 | 4 |
| | Ratio of feed volume to interior volume of extruder | g/min ·cm³ | 0.39 | 0.19 | 0.19 | 0.19 | 0.19 | 0.08 |
| | L/D | | 40 | 40 | 40 | 40 | 40 | 24.5 |
| | SME | kJ/kg | 359 | 634 | 676 | 718 | 634 | 1350 |
| | Pressurized condition | MPa | 3 | 3.2 | 3.3 | 3.4 | 2.7 | 1.2 |
| | Discharge stability | | Stable | Stable | Stable | Stable | Stable | Stable |
| | Degree of gelatinization | % | 70 | 13 | 65 | 67 | 55 | 45 |
| | Increase ratio of degree of gelatinization during gelatinization treatment | % | 57 | 0 | 52 | 54 | 42 | 32 |
| Aging conditions | Specific aging method | | Drying at room temperature | Drying at room temperature | Drying at room temperature | Water immersion --> Drying at room temperature | Drying at room temperature | Dring at 40°C for 24 hours |
| | Resistant starch | % | 4.7 | 0.92 | 2.42 | 2.45 | 2.1 | 1.2 |
| | Increase ratio of resistant starch during aging treatment | % | 132.7 | -54.5 | 19.8 | 21.3 | 4.0 | -40.6 |

[Table 2-3]

26

| Table 2 | | | Reference Example | Reference Example | Test Example | Test Example | Test Example | Test Example |
|---|---|---|---|---|---|---|---|---|
| | | | 2-3 | 2-4 | 2-9 | 2-10 | 2-11 | 2-12 |
| Gelatinization conditions | Kneading temperature (highest temperature) | °C | 120 | 120 | 120 | 120 | 120 | 110 |
| | Outlet temperature | °C | 90 | 75 | 75 | 75 | 75 | 100 |
| | Feed amount (water + powder) | g/min | 4 | 4 | 15 | 20 | 100 | 15 |
| | Ratio of feed volume to interior volume of extruder | g/min ·cm³ | 0.05 | 0.05 | 0.31 | 0.10 | 1.28 | 0.19 |
| | L/D | | 40 | 40 | 24.5 | 100 | 40 | 40 |
| | SME | kJ/kg | 1350 | 1584 | 507 | 380 | 1260 | 549 |
| | Pressurized condition | MPa | 1.2 | 1.2 | 3 | 3 | 3 | 2.5 |
| | Discharge stability | | Unstable | 不安定 | Stable | Stable | Stable | Stable |
| | Degree of gelatinization | % | 47 | 66 | 51 | 70 | 70 | 67 |
| | Increase ratio of degree of gelatinization during gelatinization treatment | % | 34 | 53 | 38 | 57 | 57 | 54 |
| Aging conditions | Specific aging method | | Dring at 40°C for 24 hours | Drying at room temperature | Drying at room temperature | Drying at room temperature | Drying at room temperature | Drying at room temperature |
| | Resistant starch | % | 1.2 | 2.4 | 2.7 | 3.1 | 3.1 | 2.2 |
| | Increase ratio of resistant starch during aging treatment | % | -40.6 | 18.8 | 33.7 | 53.5 | 53.5 | 8.9 |

[Table 2-4]

| Table 2 | | | Test Example | Test Example | Reference Example | Reference Example |
|---|---|---|---|---|---|---|
| | | | 2-13 | 2-14 | 2-5 | 2-6 |
| Gelatinization conditions | Kneading temperature (highest temperature) | °C | 120 | 120 | 120 | 90 |
| | Outlet temperature | °C | 75 | 75 | 75 | 75 |
| | Feed amount (water + powder) | g/min | 15 | 15 | 15 | 15 |
| | Ratio of feed volume to interior volume of extruder | g/min ·cm$^3$ | 0.19 | 0.19 | 0.19 | 0.19 |
| | L/D | | 40 | 40 | 40 | 40 |
| | SME | kJ/kg | 634 | 676 | 676 | 676 |
| | Pressurized condition | MPa | 13 | 5 | 3.3 | 3.3 |
| | Discharge stability | | Stable | Stable | Stable | Stable |
| | Degree of gelatinization | % | 58 | 63 | 55 | 45 |
| | Increase ratio of degree of gelatinization during gelatinization treatment | % | 45 | 50 | 42 | 32 |
| Aging conditions | Specific aging method | | Drying at room temperature | Drying at room temperature | Drying at room temperature | Drying at room temperature |
| | Resistant starch | % | 2.6 | 2.8 | 1.4 | 0.99 |
| | Increase ratio of resistant starch during aging treatment | % | 28.7 | 38.6 | -30.7 | -51.0 |

[Analysis of physical properties and characteristics of oil-and-fat-containing compositions]

The oil-and-fat-containing composition samples of the Test Examples, Comparative Examples, and Reference Examples obtained by the procedures mentioned above were subjected to the analysis for the following physical properties and characteristics.

*Separation, concentration and measurement of aroma ingredients by SPME-GC/MS:

The aroma ingredients (hexanal, 1-hexanol, and 1-pentanol) in each oil-and-fat-containing composition sample of the Test Examples, Comparative Examples, and Reference Examples were separated and concentrated using solid-phase microextraction-gas chromatography mass spectrometry (SPME-GC/MS) to determine their contents.

(1) Method of separation and concentration of aroma ingredients:

The aroma ingredients in each oil-and-fat-containing composition sample were separated and concentrated by subjecting a 25 mass% aqueous solution of the sample (1 mass part sample : 3 mass parts water) to solid-phase microextraction (SPME) under the following conditions.

<Solid phase micro-extraction conditions>

*SPME fiber: StableFlex 50/30$\mu$m, DVB/Carboxen/PDMS (SUPELCO)
*Volatile-ingredient extraction device: PAL3 RSI120 (CTC Analytics)
*Preheating: 80°C, 15 minutes
*Stirring speed: 300rpm
*Volatile ingredient extraction: 80°C, 20 minutes
*Desorption Time: 10 minutes

(2) Method for measuring the contents of the aroma ingredients:

Each aroma ingredient separated and concentrated by solid phase micro-extraction method from each oil-and-fat-containing composition sample was then subjected to gas chromatography and mass spectrometry according to the following conditions.

<Gas chromatography conditions>

*Measuring instrument: Agilent 7980B GC System (Agilent Technologies)
*GC column: DB-WAX (Agilent Technologies; length: 30m; caliber: 0.25 mm; membrane thickness: 0.25$\mu$m)
*Carrier: He gas, gas flow rate 1.0 mL/ minutes
*Temperature conditions: maintained at 40°C for 3 minutes --> heated at 10°C/minutes to 250°C --> maintained at 250°C for 10 minutes
<Mass spectrometry conditions>
*Measuring instrument: Agilent 7000C GC/MS Triple Quad (Agilent Technologies)
*Ionization method: EI (Ionizing voltage: 70eV)
*Scanning mass: m/z = 29.0 to 350.0

For each sample, the peaks of the aroma ingredients (hexanal, 1-hexanol, and 1-pentanol) were identified based on their confirmation ions shown in Table A below, and the peaks of the areas were determined. The concentration of each aroma ingredient in each sample was then calculated from the obtained peak area of each aroma ingredient, considering the dilution ratio with water.

[Table A]

| TableA | |
| --- | --- |
| Aroma ingredient | Confirmation ion (m/z) |
| Hexanal | 82 |
| 1-Hexanol | 84 |

(continued)

| TableA | |
| --- | --- |
| Aroma ingredient | Confirmation ion (m/z) |
| 1-pentanol | 70 |

*Measurement of the starch content, protein content, insoluble dietary fiber content, and dry basis water content:

The starch content, protein content, insoluble dietary fiber content, and dry basis water content of the oil-and-fat-containing composition sample of each of the Test Examples, Comparative Examples, and Reference Examples were measured according to the following methods.

The starch content of each sample was determined according to the Japan Standard Tables for Food Composition 2015 (7th revised edition), using the AOAC 996.11 method. The soluble carbohydrates (glucose, maltose, maltodextrin, etc.) that affect the measured values were removed via extraction with 80% ethanol.

The protein content of each sample was determined according to the Japan Standard Tables for Food Composition 2015 (7th revised edition), by determining the nitrogen amount using the modified Kjeldahl method and multiplying the nitrogen amount by the "nitrogen-protein conversion factor." As the "nitrogen-protein conversion factor," Specifically, a coefficient of 6.25 was used for pulse other than soybeans, which fall under "Other foods."

The insoluble dietary fiber content of each sample was determined according to the Japan Standard Tables for Food Composition 2015 (7th revised edition), using the Prosky variant method.

The dry basis water content of each sample was determined according to the Japan Standard Tables for Food Composition 2015 (7th revised edition), using the decompression heat-drying method with a heating temperature of 90°C.

*Degree of gelatinization:

The degrees of gelatinization before and after the gelatinization treatment and their difference for each sample was determined using the glucoamylase II method.

*Resistant starch content:

As explained above, the resistant starch value herein refers to the mass ratio of the resistant starch content to the total starch content {(resistant starch content)/(starch content)} (%).

The resistant starch values of each sample before and after the aging treatment were measured using RESISTANT STARCH ASSAY PROCEDURE (Megazyme).

*Measurement of the number of starch grain structures in the field of view:

The composition sample of each test section was milled and passed through a sieve with a 150 $\mu$m aperture, and 3 mg of the resulting composition powder was suspended in 50 $\mu$L of water to prepare a 6% aqueous composition-powder suspension. The suspension was then dropped onto a glass slide, covered with a cover glass, and lightly crushed to make a preparate sample. Representative sites in the preparate sample were observed with a phase contrast microscope (ECLIPSE80i, Nikon) at a magnification of 200x with polarized light to determine the number of starch grain structures in the field of view.

*Measurement of the PDI value

A portion of the composition sample of each test section was mixed with a 20-fold volume of water, and then subjected to a pulverization treatment using a homogenizer (NS-310E3 by Microtech Nithion Inc.) at 8500 rpm for 10 minutes. The total nitrogen content of the pulverized suspension was determined and multiplied by 20 to determine the total nitrogen content in the composition sample. The pulverized suspension was then centrifuged (3000 G for 10 minutes) to obtain a supernatant, and the total nitrogen content of the supernatant was determined and multiplied by 20 to determine the water-soluble nitrogen percentage of the composition sample. The PDI value for the composition sample was calculated by the total nitrogen content and the water-soluble nitrogen percentage of the composition sample. The total nitrogen content was determined using the combustion method (improved Dumas method) specified in the Food Labeling Law ("About Food Labeling Standards" (March 30, 2015, Shokuhin Table No. 139)).

*Particle size $d_{50}$:

The particle size dso of a raw material powder in the present invention (pulse in a pulverized state) after ultrasonic treatment was measured under the following conditions. Specifically, ethanol was used as the solvent for measurement. Microtrac MT3300 EXII system marketed by Microtrac Bell Inc. was used as the laser diffraction particle size analyzer for measurement. DMS2 (Data Management System version2, by Microtrac Bell Inc.) was used as the application software for measurement. When the device and the application software mentioned above were used, the measurement was carried out by: performing cleaning by pressing the Wash button of the software; carrying out calibration by pressing the Set Zero button of the software; and directly loading the sample via the Sample Loading feature until the sample concentration was adjusted to within the proper range. After the sample was loaded, the measurement sample was subjected to ultrasonic treatment by the measurement device, followed by measurement. Specifically, a sample that had not been subjected to ultrasonic treatment was put into the measurement solvent (ethanol) circulating in the measurement system, the concentration was adjusted to within the appropriate range using the Sample Loading feature, and then the ultrasonic treatment was performed by pressing the Ultrasonic Treatment button of the software (ultrasonic waves of 40 kHz frequency were applied to the sample for 3 minutes at 40 W output). Then, after three times of defoaming, the sample loading was carried out again to adjust the concentration to within the appropriate range. Thereafter, the sample was promptly laser diffracted at a flow rate of 60% with a measurement time of 10 seconds, and the result was used as the measurement value. The parameters for the measurement were: Distribution indication: Volume; Particle refractive index: 1.60; Solvent refractive index: 1.36; Upper limit of measurement: 2,000.00 $\mu$m; Lower limit of measurement: 0.021 $\mu$m.

*Results:

The physical properties and characteristics of the oil-and-fat-containing composition samples of the Test Examples, Comparative Examples, and Reference Examples determined by the procedures mentioned above are shown in Tables 3 and 4 below. The composition of Example 2-12 was pulverized into powder form with a $d_{90}$ of 100 $\mu$m.

[Table 3-1]

| Table 3 | | | Test Examples | Comparative Examples | Test Example | Test Example | Test Example | Test Example |
|---|---|---|---|---|---|---|---|---|
| | | | 1-17 | 1-1~ 1-5 | 2-1 | 2-2 | 2-3 | 2-4 |
| Product conditions | Insoluble dietary fiber content | mass % | 7.5 | | 7.5 | 16.2 | 15.1 | 7.5 |
| | Starch content | mass % | 50.2 | | 50.2 | 37 | 35.4 | 50.2 |
| | Starch grain structures (in 6% suspension of crushed composition) | /mm$^2$ | 0 | | 0 | 0 | 0 | 158 |
| | Protein content | mass % | 17.7 | | 17.7 | 22.5 | 21.0 | 17.7 |
| | PDI | mass % | 6.0 | | 6.0 | 15.0 | 13.0 | 7.0 |
| | Total oil-and-fat content | mass % | 2.7 | | 2.7 | 2.3 | 5.2 | 2.7 |
| | Dry basis water content | mass % | 12.2 | | 12.2 | 13.4 | 10.4 | 12.2 |
| | Composition shape | | Noodles with 1mm diameter | | Noodles with 1mm diameter | Noodles with 1 mm diameter | Noodles with 1mm diameter | Noodles with 1mm diameter |

[Table 3-2]

| Table 3 | | | Test Example | Reference Example | Test Example | Test Example | Test Example | Reference Example |
|---|---|---|---|---|---|---|---|---|
| | | | 2-5 | 2-1 | 2-6 | 2-7 | 2-8 | 2-2 |
| Product conditions | Insoluble dietary fiber content | mass % | 7.5 | 7.5 | 7.5 | 7.5 | 7.5 | 7.5 |
| | Starch content | mass % | 50.2 | 50.2 | 50.2 | 50.2 | 50.2 | 50.2 |
| | Starch grain structures (in 6% suspension of crushed composition) | /mm$^2$ | 258 | 495 | 0 | 0 | 0 | 0 |
| | Protein content | mass % | 17.7 | 17.7 | 17.7 | 17.7 | 17.7 | 17.7 |
| | PDI | mass % | 7.0 | 77.0 | 6.0 | 6.0 | 6.0 | 6.0 |
| | Total oil-and-fat content | mass % | 2.7 | 2.7 | 2.7 | 2.7 | 2.7 | 2.7 |
| | Dry basis water content | mass % | 12.2 | 12.2 | 12.2 | 12.2 | 12.2 | 12.2 |
| | Composition shape | | Noodles with 1mm diameter | Noodles with 1mm diameter | Noodles with 1mm diameter | Noodles with 1mm diameter | Noodles with 1mm diameter | Noodles with 1mm diameter |

[Table 3-3]

| Table 3 | | | Reference Example 2-3 | Reference Example 2-4 | Test Example 2-9 | Test Example 2-10 | Test Example 2-11 | Test Example 2-12 |
|---|---|---|---|---|---|---|---|---|
| | Insoluble dietary fiber content | mass % | 7.5 | 7.5 | 7.5 | 7.5 | 7.5 | 7.5 |
| | Starch content | mass % | 50.2 | 50.2 | 50.2 | 50.2 | 50.2 | 50.2 |
| | Starch grain structures (in 6% suspension of crushed composition) | /mm² | 0 | 0 | 158 | 269 | 0 | 58 |
| | Protein content | mass % | 17.7 | 17.7 | 17.7 | 17.7 | 17.7 | 17.7 |
| Product conditions | PDI | mass % | 6.0 | 6.0 | 6.0 | 6.0 | 6.0 | 45.0 |
| | Total oil-and-fat content | mass % | 2.7 | 2.7 | 2.7 | 2.7 | 2.7 | 2.7 |
| | Dry basis water content | mass % | 12.2 | 12.2 | 12.2 | 12.2 | 12.2 | 12.2 |
| | Composition shape | | Noodles with 1mm diameter | Noodles with 1 mm diameter | Noodles with 1mm diameter | Noodles with 1mm diameter | Noodles with 1mm diameter | Powder |

[Table 3-4]

| Table 3 | | | Test Example 2-13 | Test Example 2-14 | Reference Example 2-5 | Reference Example 2-6 |
|---|---|---|---|---|---|---|
| Product conditions | Insoluble dietary fiber content | mass % | 7.5 | 7.5 | 7.5 | 7.5 |
| | Starch content | mass % | 50.2 | 50.2 | 50.2 | 50.2 |
| | Starch grain structures (in 6% suspension of crushed composition) | /mm$^2$ | 0 | 0 | 0 | 312 |
| | Protein content | mass % | 17.7 | 17.7 | 17.7 | 17.7 |
| | PDI | mass % | 6.0 | 6.0 | 6.0 | 59.0 |
| | Total oil-and-fat content | mass % | 2.7 | 2.7 | 2.7 | 2.7 |
| | Dry basis water content | mass % | 12.2 | 12.2 | 12.2 | 12.2 |
| | Composition shape | | Granules with 5 mm diameter | Flat noodles | Noodles with 1mm diameter | Noodles with 1mm diameter |

[Table 4-1]

| Table 4 | | Test Example 1-1 | Test Example 1-2 | Test Example 1-3 | Test Example 1-4 | Test Example 1-5 | Test Example 1-6 |
|---|---|---|---|---|---|---|---|
| Aroma ingredient conditions | Hexanal content | 10ppb | 100ppb | 1ppm | 10ppm | 100ppm | 10ppb |
| | $\alpha/\beta$ peak area ratio (80°C) | 1 | 10 | 100 | 1000 | 10000 | 2 |
| | $\alpha/\gamma$ peak area ratio (80°C) | 2 | 2 | 2 | 2 | 2 | 1 |
| | $\alpha/(\beta+\gamma)$ peak area ratio (80°C) | 0.67 | 1.67 | 1.96 | 2.00 | 2.00 | 0.67 |
| | $\beta/\gamma$ peak area ratio (80°C) | 2 | 0.2 | 0.02 | 0.002 | 0.0002 | 0.5 |
| Sensory evaluation | Oxidized odor of oil and fat | 5 | 5 | 4 Raw odor slightly felt | 4 Raw odor felt | 4 Raw odor strongly felt | 5 |
| | Flavor release at eating | 5 | 5 | 4 | 4 | 4 | 5 |

[Table 4-2]

| Table 4 | | Test Example 1-7 | Test Example 1-8 | Test Example 1-9 | Test Example 1-10 | Test Example 1-11 | Test Example 1-12 |
|---|---|---|---|---|---|---|---|
| Aroma ingredient conditions | Hexanal content | 100ppb | 1ppm | 10ppm | 100ppm | 100ppb | 1ppm |
| | $\alpha/\beta$ peak area ratio (80°C) | 2 | 2 | 2 | 2 | 6 | 50 |
| | $\alpha/\gamma$ peak area ratio (80°C) | 10 | 100 | 1000 | 10000 | 3 | 50 |
| | $\alpha/(\beta+\gamma)$ peak area ratio (80°C) | 1.67 | 1.96 | 2.00 | 2.00 | 2.00 | 25.00 |
| | $\beta/\gamma$ peak area ratio (80°C) | 5 | 50 | 500 | 5000 | 0.5 | 1 |
| Sensory evaluation | Oxidized odor of oil and fat | 5 | 5 | 5 | 5 | 5 | 5 |
| | Flavor release at eating | 5 | 5 | 5 | 5 | 5 | 5 |

[Table 4-3]

| Table 4 | | Test Example 1-13 | Test Example 1-14 | Test Example 1-15 | Test Example 1-16 | Test Example 1-17 | Comparative Example 1-1 |
|---|---|---|---|---|---|---|---|
| Aroma ingredient conditions | Hexanal content | 10ppm | 100ppm | 100ppb | 100ppb | 100ppb | 100ppb |
| | $\alpha/\beta$ peak area ratio (80°C) | 400 | 100 | 1000 | 5000 | 10000 | 20000 |
| | $\alpha/\gamma$ peak area ratio (80°C) | 600 | 9000 | 1000 | 5000 | 10000 | 0.45 |
| | $\alpha/(\beta+\gamma)$ peak area ratio (80°C) | 240.00 | 98.90 | 500.00 | 2500.00 | 5000.00 | 0.45 |
| | $\beta/\gamma$ peak area ratio (80°C) | 1.5 | 90 | 1 | 1 | 1 | 0.0000225 |
| Sensory evaluation | Oxidized odor of oil and fat | 5 | 5 | 5 | 5 | 4 | 1 |
| | | | | | | | Raw odor slightly felt |
| | Flavor release at eating | 5 | 5 | 5 | 5 | 4 | 1 |

[Table 4-4]

| Table 4 | | Comparative Example | Comparative Example | Comparative Example | Comparative Example | Test Examples | Reference Example |
|---|---|---|---|---|---|---|---|
| | | 1-2 | 1-3 | 1-4 | 1-5 | 2-1~2-14 | 2-1~2-6 |
| Aroma ingredient conditions | Hexanal content | 100ppb | 100ppb | 100ppb | 10ppb | 100ppb | 100ppb |
| | $\alpha/\beta$ peak area ratio (80°C) | 0.1 | 0.1 | 0.5 | 1 | 6 | 6 |
| | $\alpha/\gamma$ peak area ratio (80°C) | 20000 | 0.5 | 0.1 | 0.2 | 3 | 3 |
| | $\alpha/(\beta+\gamma)$ peak area ratio (80°C) | 0.10 | 0.08 | 0.08 | 0.17 | 2.00 | 2.00 |
| | $\beta/\gamma$ peak area ratio (80°C) | 200000 | 5 | 0.2 | 0.2 | 0.5 | 0.5 |
| Sensory evaluation | Oxidized odor of oil and fat | 1 | 2 | 2 | 3 | 5 | 5 |
| | Flavor release at eating | 1 | 2 | 2 | 3 | Shown in Table 5 | Shown in Table 5 |

[Sensory evaluation of the oil-and-fat-containing composition samples (after gelatinization and aging)]

The oil-and-fat-containing composition sample of each of Test Examples 1-1 to 1-17 and 2-1 to 2-14, Comparative Examples 1-1 to 1-5, and Reference Examples 2-1 to 2-6 prepared as described above was subjected to gelatinization and aging treatment, and one mass of the gelatinized and aged sample was cooked in 9 masses of water at 90°C for 5 minutes and then subjected to sensory evaluation. Specifically, each cooked sample was placed on a paper plate and served to each of 10 trained sensory inspectors, who observed and tasted the dish, and evaluated its properties and eating qualities in terms of "oxidized odor of oil and fat," "flavor release at eating," "surface condition," and "powderiness" using the following criteria (the "surface condition" was not evaluated for the pulverized composition). For each evaluation item, an average of the 10 sensory inspectors' scores was calculated and rounded off to the closest whole number to obtain the final score. The term "average" (also referred to as "mean" or as "arithmetic mean") herein refers to an additive average value unless otherwise specified.

*Evaluation criteria for "oxidized odor of oil and fat":

Each oil-and-fat-containing composition sample was evaluated for oxidized odor of oil and fat on the scale of one to five below. Each sample was also evaluated for any raw odor, and comments thereon was recorded if any.

    5: Desirable, with oxidized odor of oil and fat suppressed.
    4: Relatively desirable, with oxidized odor of oil and fat moderately suppressed.
    3: Acceptable, with oxidized odor of oil and fat slightly felt.
    2: Relatively undesirable, with oxidized odor of oil and fat felt.
    1: Undesirable, with oxidized odor of oil and fat strongly felt.

The "oxidized odor of oil and fat" herein refers to undesirable odor when consumed due to oxidation of food containing oil and fat (typically odors of 1-hexanol and 1-pentanol). The "raw odor" herein refers to undesirable odor of raw pulse or other raw food ingredients (typically an odor of hexanal).

*Evaluation criteria for "flavor release at eating":

Each oil-and-fat-containing composition sample was evaluated for flavor release on the scale of one to five below. Each sample was also evaluated for the balance between the oxidized oil-and-fat odor and the flavor release, and comments thereon was recorded if any.

    5: Desirable, with flavor release strongly felt.
    4: Relatively desirable, with flavor release moderately felt.
    3: Acceptable, with flavor release felt.
    2: Relatively undesirable, with flavor weakly felt.
    1: Undesirable, with flavor release scarcely felt.

The "flavor release" herein refers to a desirable aroma that flows into the nose when the composition is consumed.

*Evaluation criteria for "surface condition":

Each oil-and-fat-containing composition sample was evaluated for surface condition on the scale of one to five below.

    5: Desirable, with very smooth surface.
    4: Relatively desirable, with generally smooth surface.
    3: Acceptable, with slight surface irregularities observed.
    2: Relatively undesirable, with some surface irregularities observed.
    1: Undesirable, with many surface irregularities observed.

The "surface condition" herein refers to observed smoothness (degree of unevenness) on the surface of the composition.

# EP 4 094 585 A1

*Evaluation criteria for "powderiness":

Each oil-and-fat-containing composition sample was evaluated for powderiness on the scale of one to five below.

5: Desirable, with no powderiness felt.
4: Relatively desirable, with little powderiness felt.
3: Acceptable, with powderiness slightly felt.
2: Relatively undesirable, with some powderiness felt.
1: Undesirable, with powderiness strongly felt.

The "powderiness" herein refers to rough texture of the composition felt upon eating.

*sensory evaluation result

The manufacturing conditions, composition, physical properties, and evaluation results of the composition samples of the Test Examples, Comparative Example, and Reference Examples are shown in Table 5 below. Evaluation of "oxidized odor of oil and fat," "flavor release at eating," and "powderiness" was also carried out for the composition samples of Test Examples 1-1 to 1-17 and Comparative Examples 1-1 to 1-5 pulverized into powder form ($d_{90}$ = 400$\mu$m, 200$\mu$m, 100$\mu$m, and 10$\mu$m), and similar evaluation results were obtained therefor.

[Table 5-1]

| Table 5 | | Test Example 2-1 | Test Example 2-2 | Test Example 2-3 | Test Example 2-4 | Test Example 2-5 | Reference Example 2-1 | Test Example 2-6 |
|---|---|---|---|---|---|---|---|---|
| Sensory evaluation | Oxidized odor of oil and fat | 5 | 5 | 5 | 5 | 5 | 5 | 5 |
| | Flavor release at eating | 5 | 4 | 4 | 5 | 5 | 1 | 5 |
| | | | | | | | Aroma unbalanced | |
| | Surface condition | 5 | 5 | 5 | 5 | 5 | 5 | 5 |
| | Powderiness | 5 | 4 | 5 | 5 | 5 | 1 | 5 |

[Table 5-2]

| Table 5 | | Test Example 2-7 | Test Example 2-8 | Reference Example 2-2 | Reference Example 2-3 | Reference Example 2-4 | Test Example 2-9 | Test Example 2-10 |
|---|---|---|---|---|---|---|---|---|
| Sensory evaluation | Oxidized odor of oil and fat | 5 | 5 | 5 | 5 | 5 | 5 | 5 |
| | Flavor release at eating | 5 | 4 | 2 | 2 | 5 | 4 | 5 |
| | Surface condition | 5 | 4 | 3 | 1 | 1 | 5 | 5 |
| | Powderiness | 5 | 4 | 1 | 3 | 5 | 3 | 5 |

EP 4 094 585 A1

[Table 5-3]

| Table 5 | | Test Example 2-11 | Test Example 2-12 | Test Example 2-13 | Test Example 2-14 | Reference Example 2-5 | Reference Example 2-6 |
|---|---|---|---|---|---|---|---|
| Sensory evaluation | Oxidized odor of oil and fat | 5 | 5 | 5 | 5 | 5 | 5 |
| | Flavor release at eating | 5 | 4 | 4 | 5 | 2 | 1 |
| | | | | | | | Aroma unbalanced |
| | Surface condition | 5 | - | 5 | 5 | 4 | 4 |
| | Powderiness | 5 | 5 | 4 | 5 | 4 | 1 |

## INDUSTRIAL APPLICABILITY

The oil-and-fat-containing composition of the present invention is advantageous in that the oxidized odor of oil and fat caused by 1-hexanol and 1-pentanol is suppressed, and is therefore expected to have various applications in the food industry.

## Claims

1. An oil-and-fat-containing composition comprising 1-hexanol and/or 1-pentanol for food, the composition further comprising hexanal and having:

    (A) a hexanal content of 10 mass ppb or more to 100 mass ppm or less; and
    (B) an $\alpha/\beta$ ratio of 1 or more to 10000 or less and/or an $\alpha/\gamma$ ratio of 1 or more to 10000 or less, where $\alpha$ refers to a peak area of hexanal (m/z=82), $\beta$ refers to a peak area of 1-hexanol (m/z=84), and $\gamma$ refers to a peak area of 1-pentanol (m/z=70) obtained by measuring the composition at a sample temperature of 80°C using solid-phase micro-extraction gas chromatography/mass spectrometry.

2. The oil-and-fat-containing composition according to claim 1, further having:
    (C) an $\alpha/(\beta+\gamma)$ ratio of 0.5 or more to 5000 or less.

3. The oil-and-fat-containing composition according to claim 1 or 2, further having:
    (D) a $\beta/\gamma$ ratio of 0.2 or more.

4. The oil-and-fat-containing composition according to any one of claims 1 to 3, further having:
    (E) an insoluble dietary fiber content of 1 mass % or more in terms of dry mass basis.

5. The oil-and-fat-containing composition according to any one of claims 1 to 4, further having:
    (F) a starch content of 10 mass % or more in terms of dry mass basis.

6. The oil-and-fat-containing composition according to any one of claims 1 to 5, further having:
    (G) a protein content of 5.5 mass % or more in terms of dry mass basis.

7. The oil-and-fat-containing composition according to any one of claims 1 to 6, further having:
    (H) a total oil-and-fat content of 0.01 mass % or more in terms of dry mass basis.

8. The oil-and-fat-containing composition according to any one of claims 1 to 7, further having:
    (I) a dry basis water content of 60 mass % or less.

9. The oil-and-fat-containing composition according to any one of claims 1 to 8, further having:

(J) a resistant starch value of 1.5% or more.

10. The oil-and-fat-containing composition according to any one of claims 1 to 9, further having a protein dispersibility index (PDI) of less than 55 mass %.

11. The oil-and-fat-containing composition according to any one of claims 1 to 10, wherein when a 6% suspension of a crushed product of the composition is observed, the number of starch grain structures observed is 300 /mm$^2$ or less.

12. The oil-and-fat-containing composition according to any one of claims 1 to 11, comprising a pulse.

13. The oil-and-fat-containing composition according to claim 12, wherein the pulse is a pulverized pulse.

14. The oil-and-fat-containing composition according to claim 12 or 13, wherein the pulse is one or more species of pulse selected from Pisum, Phaseolus, Cajanus, Vigna, Vicia, Cicer, Glycine and Lens species.

15. The oil-and-fat-containing composition according to any one of claims 1 to 14, having a degree of gelatinization of 30% or more.

16. The oil-and-fat-containing composition according to claim 15, wherein the degree of gelatinization has increased by 5% or more through a gelatinization treatment.

17. The oil-and-fat-containing composition according to claim 15 or 16, wherein starch at least on the solid surface has been aged.

18. The oil-and-fat-containing composition according to claim 17, wherein the resistant starch value has increased by more than 0% through an aging treatment.

19. The oil-and-fat-containing composition according to any one of claims 1 to 18, which is in a solid state.

20. A crushed oil-and-fat-containing composition produced by crushing the solid oil-and-fat-containing composition according to claim 19.

21. A crushed oil-and-fat-containing composition agglomerate produced by agglomerating the crushed oil-and-fat-containing composition according to claim 20.

22. A food product comprising the oil-and-fat-containing composition according to any one of claims 1 to 19 and/or the crushed oil-and-fat-containing composition according to claim 20 and/or the crushed oil-and-fat-containing composition agglomerate according to claim 21.

23. A method for producing an oil-and-fat-containing composition according to any one of claims 1 to 19, comprising: mixing an oil-and-fat-containing food ingredient optionally with one or more other ingredients; and adjusting the hexanal, 1-hexanol, and 1-pentanol contents so as to satisfy the requirements recited in (A) and (B).

24. The method according to claim 23, wherein the adjusting of the hexanal, 1-hexanol, and 1-pentanol contents is carried out by subjecting an oil-and-fat-containing food ingredient having a total content of 1-hexanol and 1-pentanol of 1 mass ppb or more to a gelatinization treatment.

25. A method for producing the oil-and-fat-containing composition according to claim 17 or 18, comprising: subjecting an oil-and-fat-containing composition produced via the method according to claim 23 or 24 to an aging treatment of starch.

26. A method for producing the crushed oil-and-fat-containing composition according to claim 20, comprising: crushing an oil-and-fat-containing composition produced via the method according to any one of claims 23 to 25.

27. A method for producing the crushed oil-and-fat-containing composition agglomerate according to claim 21, comprising: agglomerating a crushed oil-and-fat-containing composition produced via the method according to claim 26.

## INTERNATIONAL SEARCH REPORT

| | International application No. |
|---|---|
| | PCT/JP2021/004661 |

### A. CLASSIFICATION OF SUBJECT MATTER
A23L 5/00(2016.01)i; A23L 7/109(2016.01)i; A23D 7/005(2006.01)i; A23D
9/007(2006.01)i
FI: A23L5/00 K; A23D9/007; A23D7/005; A23L7/109 A
According to International Patent Classification (IPC) or to both national classification and IPC

### B. FIELDS SEARCHED
Minimum documentation searched (classification system followed by classification symbols)
A23D7/00-9/06, A23L5/00-9/20, 29/00-29/225

Documentation searched other than minimum documentation to the extent that such documents are included in the fields searched

| Published examined utility model applications of Japan | 1922-1996 |
|---|---|
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580 (JDreamIII); CAplus (STN); FSTA (STN)

### C. DOCUMENTS CONSIDERED TO BE RELEVANT

| Category* | Citation of document, with indication, where appropriate, of the relevant passages | Relevant to claim No. |
|---|---|---|
| X | JP 2011-92069 A (TAISHI FOOD INC.) 12 May 2011 (2011-05-12) paragraphs [0028]-[0039] | 1-3, 6-7, 12, 14, 22-23 |
| X | US 5989620 A (WANG, N. et al.) 23 November 1999 (1999-11-23) claim 12, page 1, "technical field", page 2, line 56 to page 3, line 10 | 1-27 |
| X | CN 108244501 A (LIU, Jiming) 16 July 2018 (2018-07-16) claims, paragraph [0014], examples | 1-27 |
| X | CN 108041459 A (LIU, Jiming) 18 May 2018 (2018-05-18) claims, paragraph [0018], examples | 1-27 |
| X | JP 59-66855 A (MAGGIE AG) 16 April 1984 (1984-04-16) claim 1, example 8 | 1-27 |

☒ Further documents are listed in the continuation of Box C.    ☒ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 April 2021 (13.04.2021) | 20 April 2021 (20.04.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

44

**INTERNATIONAL SEARCH REPORT**

| International application No. |
| --- |
| PCT/JP2021/004661 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | WO 2018/166876 A1 (BARILLA G. E R. FRATELLI S.P. A.) 20 September 2018 (2018-09-20) claims 1, 4, page 7, lines 13-17, page 10, line 17 to page 11, line 8, example 2 | 1-9, 11-27 |
| A | 酒井孝ら，製造条件の異なるスパゲティの機械的性質の調査，日本食品工学会誌， 2014, 15(4), pp. 259-265 in particular, page 262, left column, line 4 from the bottom to right column, line 2, (SAKAI, Takashi et al., "Material Properties for Spaghetti with Different Product Conditions", Japan Journal of Food Engineering) | 9, 17-18 |
| A | JP 2017-63781 A (J-OIL MILLS, INC.) 06 April 2017 (2017-04-06) | 1-27 |

Form PCT/ISA/210 (continuation of second sheet) (January 2015)

## INTERNATIONAL SEARCH REPORT

International application No.

PCT/JP2021/004661

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

Information on patent family members

| International application No. |
| --- |
| PCT/JP2021/004661 |

| Patent Documents referred in the Report | Publication Date | Patent Family | Publication Date |
| --- | --- | --- | --- |
| JP 2011-92069 A | 12 May 2011 | WO 2011/052793 A1<br>CN 102573504 A<br>CN 103444875 A<br>CN 103444901 A<br>CA 2216295 A1 | |
| US 5989620 A | 23 Nov. 1999 | CA 2216295 A1 | |
| CN 108244501 A | 16 Jul. 2018 | (Family: none) | |
| CN 108041459 A | 18 May 2018 | (Family: none) | |
| JP 59-66855 A | 16 Apr. 1984 | US 4544563 A<br>claim 1, example 8<br>EP 105100 A1 | |
| WO 2018/166876 A1 | 20 Sep. 2018 | JP 2020-509771 A<br>EP 3595461 A1<br>CN 110505809 A | |
| JP 2017-63781 A | 06 Apr. 2017 | (Family: none) | |

Form PCT/ISA/210 (patent family annex) (January 2015)

**INTERNATIONAL SEARCH REPORT**

International application No.

PCT/JP2021/004661

<Continuation of Box No. III>

Document 1: JP 2011-92069 A (Taishi Food Inc.) 12 May 2011 (2011-05-12) paragraphs [0028]-[0039] & WO 2011/052793 A1 & CN 102573504 A & CN 103444875 A & CN 103444901 A

Invention 1 and invention 2 below are not associated to form a single general inventive concept as follows.

(Invention 1) Claims 1-3 and 10-12
Claims 1-3 lack novelty in light of document 1, and thus do not have a special technical feature.
Meanwhile, since claims 10-12 is dependent on claim 1, and (A) and (B), which are technical features of claim 1, relate to 1-hexanol, 1-pentanol, and hexanol which are much contained in pulses, claim 1 has high technical relevance to the technical feature with respect to pulses added to claims 10-12.
Therefore, claims 1-3 and 10-12 are classified as invention 1.

(Invention 2) Claims 4-9 and 13-25
Claims 4-9 and 13-20 are dependent on claim 1 classified as invention 1, but technical features added to claims 4-9 and 13-20 have little technical relevance to (A) and (B), technical features of claim 1. Thus, claims 4-9 and 13-20 are not considered to be inventively associated with claim 1.
Also, claims 21-25 are not substantially identical or equivalent to any of the claims classified as invention 1.
Therefore, claims 4-9 and 13-25 cannot be classified as invention 1.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018147326 A

**Non-patent literature cited in the description**

- Japan Standard Tables for Food Composition. 2015
- *CHEMICAL ABSTRACTS,* 66-25-1
- *CHEMICAL ABSTRACTS,* 111-27-3
- *CHEMICAL ABSTRACTS,* 71-41-0
- About Food Labeling Standards. *Food Labeling Law,* 30 March 2015, (139
- Pocket Book of Food Additives Labeling. 2011